# EUROPEAN PATENT APPLICATION

(11) **EP 4 471 070 A1**
(43) Date of publication of application: **04.12.2024**
(21) Application number: 22924056.9
(22) Date of filing: 16.11.2022
(51) Int. Cl.: C08F 30/08, C07F 7/08

(54) **POLYMER COMPOUND, REACTIVE COMPOUND, POLYMER CROSSLINKING AGENT, POLYMER MODIFIER, METHOD FOR FORMING A CROSSLINKED SECTION, METHOD FOR POLYMER MODIFICATION, AND METHOD FOR POLYMERIZING AND METHOD FOR DECOMPOSING POLYMER COMPOUND**

(30) Priority: 25.01.2022 JP 2022009539
(71) Applicant: Japan Science and Technology Agency, Kawaguchi-shi, Saitama 332-0012 (JP)
(72) Inventor: MASAI Hiroshi, Tokyo 153-8902 (JP); TERAO Jun, Tokyo 153-8902 (JP)
(74) Representative: Gilani, Anwar
(86) International application number: PCT/JP2022/042578
(87) International publication number: WO 2023/145203

(57) **Abstract**

This polymer compound has a structure in which a conjugated carbon atom of a condensed polycyclic aromatic ring group and a silicon atom are bonded to each other in a bond-cleavable form by cooperative action between light irradiation and an acid.

## Description

### [Technical Field]

The present invention relates to a polymer compound, a reactive compound, a polymer crosslinking agent, a polymer modifier, a crosslinked part forming method, a polymer modifying method, a polymer compound polymerizing method, and a polymer compound decomposing method.

The present application claims priority based on Japanese Patent Application No. 2022-9539 filed on January 25, 2022, in Japan, the contents of which are incorporated here by reference.

### [Background Art]

Studies on an optically processable material such as a material which is decomposed by light is in progress. However, the optically processable material is basically unstable to light, and the material is modified by ambient light. Therefore, there is a problem that use of a material to which a new function is imparted by optical processing is difficult under ambient light.

To solve this problem, Non-Patent Document 1 discloses an invention in which a platinum complex which is cleaved only in coexistence of light and an acid is introduced into a polymer. This makes it possible to obtain stability against ambient light by performing processing using cooperative action between light irradiation and an acid at the time of processing and removing one of the stimuli (light irradiation or acid) after processing.

### [Citation List]

### [Non-Patent Document]

[Non-Patent Document 1]
   Martin Go Russell, Shun-ichi Kaneko, Daiki Inamori, Hiroshi Masai, Jun Terao, "Gel to Sol Conversion Technique Utilizing Acid/Light-Induced Bond Cleavage Reaction of Platinum Acetylide Complex", Proceedings of CSJ Chemical FESTA 2018, P2-075
[Non-Patent Document 2]
   Shin-ichi Kondo, Yuka Taguchi, Yi Bie, "Solvent dependent intramolecular excimer emission of di(1-pyrenyl)silane and di(1-pyrenyl)methane derivative", RSC Advances, 2015, 5, 5846-5849
[Non-Patent Document 3]
   Tsubasa Kuwajima, Shin-ichi KONDO, "Fluorescence Properties and Solvent Dependency of Diarylmethane and Silane Derivatives", Proceedings of the 30 Annual Banyu Sendai Symposium, P-12

### [Summary of Invention]

### [Technical Problem]

However, the platinum complex of Non-Patent Document 1 uses expensive platinum. Therefore, there is a demand for an optically processable material which is less expensive and stable under ambient light.

The present invention has been made in view of the above circumstances, and an object of the present invention is to provide a polymer compound, a reactive compound, a polymer crosslinking agent, a polymer modifier, a crosslinked part forming method, a polymer modifying method, a polymer compound polymerizing method, and a polymer compound decomposing method, which are inexpensive, stable under ambient light, and optically processable.

### [Solution to Problem]

To solve the above problems, the present invention proposes the following means.
<1> A polymer compound according to an aspect of the present invention has a structure in which a conjugated carbon atom of a condensed polycyclic aromatic ring group and a silicon atom are bonded to each other in a bond-cleavable form by cooperative action between light irradiation and an acid.
<2> In the polymer compound according to <1>, the light irradiation may be irradiation light with light including an absorption wavelength region of the structure in which bonding is formed in a bond-cleavable form.
<3> The polymer compound according to <1> or <2> may further have a side chain, and the structure may be included in the side chain.
<4> The polymer compound according to <1> or <2> may further have a crosslinked part which bonds main chains to each other, and the structure may be included in the crosslinked part.
<5> In the polymer compound according to <1> or <2>, the structure may be included in a main chain.
<6> In the polymer compound according to any one of <1> to <5>, the structure may be represented by the following formula (1). 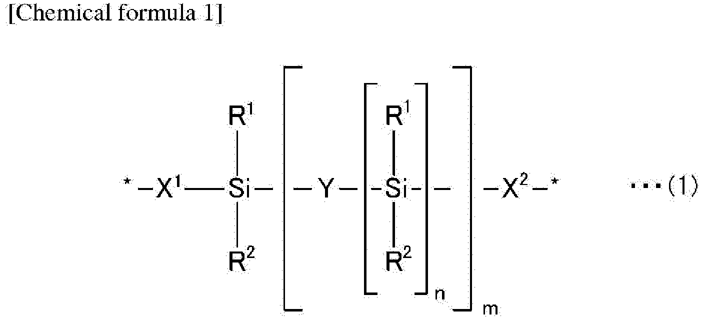 wherein, X¹ is a monovalent or divalent condensed polycyclic aromatic ring group with or without a substituent, X² is a divalent condensed polycyclic aromatic ring group with or without a substituent or a single bond, Y is a single bond, an oxygen atom, or an alkylene group, R¹ is an alkyl group or an alkoxy group, R² is an alkyl group or an alkoxy group, n is 0 or 1, m is an integer of 0 to 5, and * is a bond. Note that, when Y is a single bond, n is 0, and when Y is an oxygen atom and n is 0, m is 1.
<7> In the polymer compound according to <6>, each of the condensed polycyclic aromatic ring groups of X¹ and X² may be formed by condensation of 2 to 6 aromatic rings.
<8> In the polymer compound according to <7>, m may be 0.
<9> In the polymer compound according to <7>, m may be 1.
<10> In the polymer compound according to any one of <6> to <9>, R¹ may be a methyl group or an ethyl group, and R² may be a methyl group or an ethyl group.
<11> In the polymer compound according to any one of <6> to <10>, the condensed polycyclic aromatic ring group of X² may be a pyrenylene group with or without a substituent.
<12> A reactive compound according to an aspect of the present invention has a structure in which a conjugated carbon atom of a condensed polycyclic aromatic ring group and a silicon element are bonded to each other in a bond-cleavable form by cooperative action between light irradiation and an acid, and one or more functional groups capable of being bonded to another compound.
<13> In the reactive compound according to <12>, the light irradiation may be irradiation light with light including an absorption wavelength region of the structure in which bonding is formed in a bond-cleavable form.
<14> In the reactive compound according to <12> or <13>, the structure may be represented by the following formula (2). 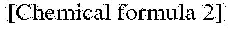 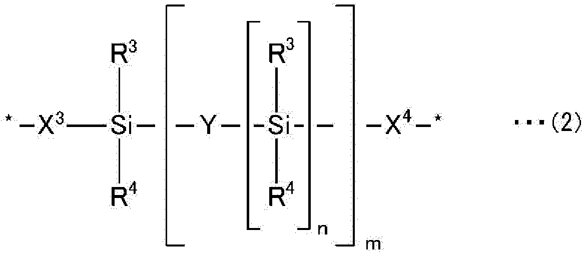 wherein, X³ is a monovalent or divalent condensed polycyclic aromatic ring group with or without a substituent, X⁴ is a divalent condensed polycyclic aromatic ring group with or without a substituent or a single bond, Y is a single bond, an oxygen atom, or an alkylene group, R³ is an alkyl group or an alkoxy group, R⁴ is an alkyl group or an alkoxy group, n is 0 or 1, m is an integer of 0 to 5, and * is a bond, Note that, when Y is a single bond, n is 0, and when Y is an oxygen atom and n is 0, m is 1.
<15> In the reactive compound according to <14>, each of the condensed polycyclic aromatic ring groups of X³ and X⁴ may be formed by condensation of 2 to 6 aromatic rings.
<16> In the reactive compound according to <15>, m may be 0.
<17> In the reactive compound according to <15>, m may be 1.
<18> In the reactive compound according to any one of <14> to <17>, R³ may be a methyl group or an ethyl group, and R⁴ may be a methyl group or an ethyl group.
<19> In the reactive compound according to any one of <14> to <18>, the condensed polycyclic aromatic ring group of X⁴ may be a pyrenylene group with or without a substituent.
<20> A polymer crosslinking agent according to an aspect of the present invention contains the reactive compound according to any one of <12> to <19>.
<21> A polymer modifier according to an aspect of the present invention contains the reactive compound according to any one of <12> to <19>.
<22> A crosslinked part forming method according to an aspect of the present invention includes a step of forming a crosslinked part by chemically bonding the functional group of the reactive compound according to any one of <12> to <19> to a functional group capable of being bonded to another compound, included in a polymer compound as a main chain.
<23> Apolymer modifying method according to an aspect of the present invention includes a step of modifying a polymer compound as a main chain by chemically bonding the functional group of the reactive compound according to any one of <12> to <19> to a functional group capable of being bonded to another compound, included in the polymer compound.
<24> A polymer compound polymerizing method according to an aspect of the present invention includes a step of polymerizing the reactive compound according to any one of <12> to <19> and a polymerizable monomer.
<25> A decomposition method according to an aspect of the present invention includes a step of decomposing the structure by irradiating the polymer compound according to any one of <1> to <11> with light in the presence of an acid.

### [Advantageous Effects of Invention]

According to the above aspects of the present invention, it is possible to provide a polymer compound, a reactive compound, a polymer crosslinking agent, a polymer modifier, a crosslinked part forming method, a polymer modifying method, a polymer compound polymerizing method, and a polymer compound decomposing method, which are inexpensive, stable under ambient light, and optically processable.

### [Brief Description of Drawings]

FIG. 1 is a diagram illustrating an observation result of a polymer compound of Example 1 before light irradiation and an observation result thereof after light irradiation in the presence of an acid.
FIG. 2 is a graph illustrating a result of comparing a swelling degree in a case where light irradiation treatment is performed in the presence of an acid, a swelling degree in a case where only light irradiation treatment is performed, and a swelling degree in a case where only acid treatment is performed.
FIG. 3 is a diagram illustrating an observation result of a side surface of a gel swollen with water after being subjected to light irradiation treatment in the presence of an acid under ultraviolet (365 nm) irradiation.
FIG. 4 is a diagram illustrating an observation result of an upper surface of a gel swollen with water after being subjected to light irradiation treatment in the presence of an acid under ultraviolet (365 nm) irradiation.
FIG. 5 is an emission spectrum of a gel swollen with water after light irradiation treatment in the presence of an acid, measured using a hyperspectral camera.
FIG. 6 is a diagram illustrating an observation result of a side surface of a gel swollen with water after being subjected only to light irradiation treatment under ultraviolet (365 nm) irradiation.
FIG. 7 is a diagram illustrating an observation result of an upper surface of a gel swollen with water after being subjected only to light irradiation treatment under ultraviolet (365 nm) irradiation.
FIG. 8 is a diagram illustrating an observation result of a side surface of a gel swollen with water after being subjected only to acid treatment under ultraviolet (365 nm) irradiation.
FIG. 9 is a diagram illustrating an observation result of an upper surface of a gel swollen with water after being subjected only to acid treatment under ultraviolet (365 nm) irradiation.
FIG. 10 is a diagram illustrating a relationship between elapsed time and a storage elastic modulus G' when viscoelasticity measurement is performed while light irradiation is intermittently performed in the presence of an acid.
FIG. 11 is a diagram illustrating a relationship between elapsed time and a storage elastic modulus G' at each acid concentration when viscoelasticity measurement is performed while light irradiation is performed.
FIG. 12 is a diagram illustrating a relationship between elapsed time and a storage elastic modulus G' at each irradiation intensity when viscoelasticity measurement is performed while light irradiation is performed.
FIG. 13 is a diagram illustrating a relationship between light irradiation time and a storage elastic modulus G' when viscoelasticity measurement is performed while a gel in a dry state (swelling degree: 1) is irradiated with light in the presence of an acid.
FIG. 14 is a diagram illustrating a relationship between light irradiation time and a storage elastic modulus G' when viscoelasticity measurement is performed while a gel in a swollen state (swelling degree: 3.4) is irradiated with light in the presence of an acid.
FIG. 15 is a diagram illustrating a relationship between light irradiation time and a storage elastic modulus G' when viscoelasticity measurement is performed while a gel in a swollen state (swelling degree: 5.4) is irradiated with light in the presence of an acid.

### [Description of Embodiments]

The present inventors have intensively conducted studies on an optically processable material which is stable under ambient light, and as a result, have found that, by irradiating a structure in which a conjugated carbon atom of a condensed polycyclic aromatic ring group such as dimethyldipyrenylsilane is bonded to a silicon atom with light in the presence of an acid, a bond between the conjugated carbon atom and the silicon atom is cleaved. As described in Non-Patent Documents 2 and 3, dipyrenylsilane has been conventionally studied for light response characteristics of a fluorescent sensor or the like, but it has not been reported that a bond between a conjugated carbon atom and a silicon atom is cleaved by such cooperative action between light irradiation and an acid. The present invention is an invention based on the above finding.

Note that, here, "irradiation with light" means, for example, irradiation with light including an absorption wavelength region of the above-described structure in which "bond cleavage" is possible. The "cooperative action between light irradiation and an acid" means, for example, that light irradiation and an acid having different actions act together while sharing role and action in a mechanism necessary for cleaving a bond between a conjugated carbon atom and a silicon atom to cleave the bond, thereby enabling the bond cleavage. The "cooperative action between light irradiation and an acid" may be cooperative action between light irradiation and an acid directly given, or may be cooperative action between light irradiation and an acid indirectly given. In a case of "cooperative action between light irradiation and an acid indirectly given", to cause an acid to indirectly act, by additionally giving the acid to a polymer base material in advance, the cooperative action between light irradiation and an acid indirectly given can also be replaced with surface cooperative action between light irradiation and water directly given.

### (First Embodiment)

First, a polymer compound according to a first embodiment of the present invention will be described.

### (Polymer compound according to first embodiment)

A polymer compound according to a first embodiment of the present invention has a structure in which a conjugated carbon atom of a condensed polycyclic aromatic ring group and a silicon atom are bonded to each other in a bond-cleavable form by cooperative action between light irradiation and an acid. The structure in which a conjugated carbon atom and a silicon atom are bonded to each other in a bond-cleavable form by cooperative action between light irradiation and an acid is, for example, a structure in which a conjugated carbon atom of a condensed polycyclic aromatic ring group and a silicon atom directly form a covalent bond, and an electron-donating group such as an alkyl group or an alkoxy group is bonded to the silicon atom. The polymer compound according to the first embodiment has a main chain and a crosslinked part which bonds the main chains to each other.

### "Crosslinked part"

The crosslinked part has a structure in which a conjugated carbon atom of a condensed polycyclic aromatic ring group and a silicon atom are bonded to each other in a bond-cleavable form by cooperative action between light irradiation and an acid (hereinafter, also referred to as a cleavable structure). In the polymer compound of the first embodiment, main chains in the polymer compound are crosslinked to each other via the cleavable structure. By irradiating the cleavable structure with light in the presence of an acid, the bond between the conjugated carbon atom and the silicon atom is cleaved, whereby optical processing is possible. That is, the bond between the conjugated carbon atom and the silicon atom is cleaved by cooperative action between light irradiation and an acid, and optical processing is possible. The polymer compound according to the first embodiment is stable under ambient light because the bond between the conjugated carbon atom and the silicon atom is not cleaved without an acid even when being irradiated with light. One of presumed mechanisms by which bond cleavage occurs is, for example, a mechanism through a reaction process in which a protonated aromatic ring typified by a Wheland intermediate or a structure having the same action as that of such an intermediate is formed by irradiating the cleavable structure with light in the presence of an acid.

The structure in which the conjugated carbon atom and the silicon atom are bonded to each other in a bond-cleavable form by cooperative action between light irradiation and an acid is preferably a structure represented by the following formula (1). In the following formula (1), X¹ is a divalent condensed polycyclic aromatic ring group with or without a substituent, and X² is a divalent condensed polycyclic aromatic ring group with or without a substituent or a single bond. Y is a single bond, an oxygen atom, or an alkylene group, R¹ is an alkyl group or an alkoxy group, R² is an alkyl group or an alkoxy group, n is 0 or 1, m is an integer of 0 to 5, and * is a bond. Note that, when Y is a single bond, n is 0, and when Y is an oxygen atom and n is 0, m is 1. m may be 0 or 1.

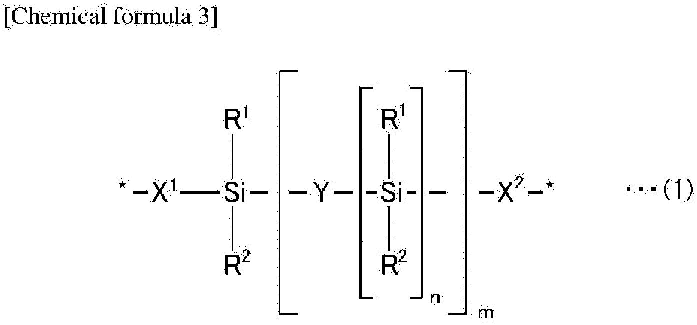

X¹ is a divalent condensed polycyclic aromatic ring group with or without a substituent, and X² is a divalent condensed polycyclic aromatic ring group with or without a substituent or a single bond. X¹ and X² may be the same or different. Here, the divalent condensed polycyclic aromatic ring group is a group obtained by removing two hydrogen atoms from a condensed polycyclic aromatic ring. The condensed polycyclic aromatic ring refers to an aromatic ring formed by 2 or more monocyclic rings sharing (condensing) only one side of each ring. Rings constituting the condensed polycyclic aromatic ring group may include only an aromatic ring, a heteroaromatic ring, or an aromatic ring and a heteroaromatic ring. Rings constituting the condensed polycyclic aromatic ring group preferably include only an aromatic ring.

The number of rings in the condensed polycyclic aromatic ring is 2 or more. The number of rings is more preferably 4 or more. The number of rings in the condensed polycyclic aromatic ring is preferably 9 or less. More preferably, the number of rings in the condensed polycyclic aromatic ring is 6 or less. The condensed polycyclic aromatic ring group is preferably formed by condensation of 2 to 6 aromatic rings, and particularly preferably formed by condensation of 4 aromatic rings.

When the condensed polycyclic aromatic ring constituting the divalent condensed polycyclic aromatic ring group is a condensed polycyclic hydrocarbon, examples of the condensed polycyclic hydrocarbon include pentalene, indene, naphthalene, azulene, heptalene, biphenylene, as-indacene, s-indacene, acenaphthylene, fluorene, phenalene, phenanthrene, anthracene, fluoranthene, acephenanthrylene, aceanthrylene, triphenylene, pyrene, chrysene, tetracene, pleiadene, picene, perylene, pentaphene, pentacene, tetraphenylene, and hexaphene. The condensed polycyclic hydrocarbon is preferably, for example, pyrene. In this case, the divalent condensed polycyclic aromatic ring group is a pyrenylene group.

When the condensed polycyclic aromatic ring constituting the divalent condensed polycyclic aromatic ring group is a condensed heterocyclic ring, examples of the condensed heterocyclic ring include indole, indoline, indazole, chromene, quinoline, isoquinoline, phthalazine, quinazoline, quinoxaline, carbazole, phenazine, phenanthridine, and phenoxazine.

A hydrogen atom in the ring structure of the divalent condensed polycyclic aromatic ring group may be replaced. A substituent with which a hydrogen atom in the ring structure is replaced is not particularly limited as long as photoreaction is not suppressed. Examples of the substituent include an alkyl group, an alkoxy group, a carboxyl group, a hydroxy group, a cyano group, and a nitro group. The number of substituents is not particularly limited as long as photoreaction is not suppressed. For example, the number of substituents in the divalent condensed polycyclic aromatic ring group is 1 to 4.

Each of R¹ and R² is an alkyl group or an alkoxy group. R¹ and R² may be the same or different. Examples of the alkyl group include a methyl group, an ethyl group, a propyl group, an isopropyl group, a butyl group, an isobutyl group, an s-butyl group, a t-butyl group, a pentyl group, a hexyl group, a heptyl group, an octyl group, a nonyl group, and a decyl group, and a linear lower alkyl group is preferable. When each of R¹ and R² is an alkyl group, the alkyl group is preferably a methyl group or an ethyl group. Examples of the alkoxy group include a methoxy group, an ethoxy group, a propoxy group, an isopropoxy group, a butoxy group, an isobutoxy group, an s-butoxy group, a t-butoxy group, a pentyloxy group, a hexyloxy group, a heptyloxy group, an octyloxy group, a nonyloxy group, and a decyloxy group, and a linear lower alkoxy group is preferable. When each of R¹ and R² is an alkoxy group, the alkoxy group is preferably a methoxy group or an ethoxy group. By using a linear lower alkyl group such as a methyl group or an ethyl group or a linear lower alkoxy group such as a methoxy group or an ethoxy group for each of R¹ and R², an influence of steric hindrance can be reduced.

### "Main chain"

The structure of the main chain of the polymer compound according to the first embodiment is not particularly limited. Examples of a polymer which can be used for the main chain include a polymer of a polymerizable monomer. Polymerization reaction is not particularly limited, and sequential polymerization such as polycondensation or polyaddition, radical polymerization, ring-opening polymerization, click reaction, and the like can be used.

Examples of a polymerizable monomer capable of ring-opening polymerization include norbornene, acetylnorbornene, ethylene oxide, propylene oxide, ethyleneimine, trimethylene oxide, tetrahydrofuran, β-propiolactone, γ-butyrolactone, and ε-caprolactone.

Examples of a polymerizable monomer capable of radical polymerization include: an ethylene; a vinylaryl monomer such as styrene, α-methylstyrene, o-chlorostyrene, or vinyltoluene; an ester of a monocarboxylic acid having 1 to 18 carbon atoms and a vinyl alcohol, such as vinyl acetate, vinyl propionate, vinyl-n-butyrate, vinyl laurate, or vinyl stearate; an α,β-monoethylenically unsaturated monocarboxylic acid or dicarboxylic acid having 3 to 6 carbon atoms, such as acrylic acid, methacrylic acid, maleic acid, fumaric acid, or itaconic acid; an ester of an alkanol having 1 to 12 carbon atoms and an α,β-monoethylenically unsaturated monocarboxylic acid or dicarboxylic acid, such as methyl acrylate, methyl methacrylate, ethyl acrylate, ethyl methacrylate, n-butyl acrylate, n-butyl methacrylate, isobutyl acrylate, isobutyl methacrylate, 2-ethylhexyl acrylate, 2-ethylhexyl methacrylate, dimethyl maleate, or di-n-butyl maleate; an acrylic acid aryl ester such as benzyl acrylate; a nitrile of an α,β-monoethylenically unsaturated carboxylic acid, such as acrylonitrile; an acrylamide such as N-isopropylacrylamide or hydroxyethylacrylamide; a hydroxy group-containing acrylate such as 2-hydroxyethyl acrylate; and a C4 to C8 conjugated diene such as 1,3-butadiene or isoprene. In a case of radical polymerization, the polymerizable monomer is preferably one or more selected from the group consisting of acrylic acid, methyl methacrylate, methyl acrylate, ethyl acrylate, benzyl methacrylate, 2-hydroxyethyl acrylate, and N-isopropylacrylamide.

Examples of other polymerizable monomers include: a polyvalent carboxylic acid monomer such as fumaric acid, maleic acid, mesaconic acid, succinic acid, citric acid, terephthalic acid, or isophthalic acid; a polyvalent alcohol monomer such as ethylene glycol, propylene glycol, butanediol, diethylene glycol, or hexanediol; a silane-based monomer such as dimethyldichlorosilane; and a polyvalent isocyanate such as 2,4-tolylene diisocyanate, 2,6-tolylene diisocyanate, 4,4'-diphenylmethane diisocyanate, isophorone diisocyanate, 1,3-cyclohexane diisocyanate, 1,4-cyclohexane diisocyanate, or 1,6-hexamethylene diisocyanate.

When a single monomer can be polymerized in polymer synthesis, the above-described polymerizable monomer may be used singly, or two or more types thereof may be used to form a random copolymer. Monomers can be appropriately selected and polymerized to obtain desired characteristics.

Specific examples of the polymer compound (also referred to as a main chain polymer) which can be used as the main chain include polystyrene, polyacrylic acid, polymethacrylic acid, polyester, polyamide, polyurethane, polycarbonate, polyvinyl alcohol, polyvinylpyrrolidone, polyimide, polyamide, polybutadiene, dimethylpolysiloxane, and polyacetylnorbornene.

### <Reactive compound>

A reactive compound according to the first embodiment has a structure (cleavable structure) in which a conjugated carbon atom of a condensed polycyclic aromatic ring group and a silicon element are bonded to each other in a bond-cleavable form by cooperative action between light irradiation and an acid, and 2 or more functional groups capable of being bonded to another compound. Each portion will be described below.

### "Cleavable structure"

The cleavable structure of the reactive compound is preferably a structure represented by the following formula (2). In the following formula (2), X³ is a divalent condensed polycyclic aromatic ring group with or without a substituent, X⁴ is a divalent condensed polycyclic aromatic ring group with or without a substituent or a single bond, Y is a single bond, an oxygen atom, or an alkylene group, R³ is an alkyl group or an alkoxy group, R⁴ is an alkyl group or an alkoxy group, n is 0 or 1, m is an integer of 0 to 5, and * is a bond. Note that, when Y is a single bond, n is 0, and when Y is an oxygen atom and n is 0, m is 1. Each of the bonds of X³ and X⁴ may be bonded to a functional group capable of being bonded to another compound or may be bonded to another functional group or the like. m may be 0 or 1.

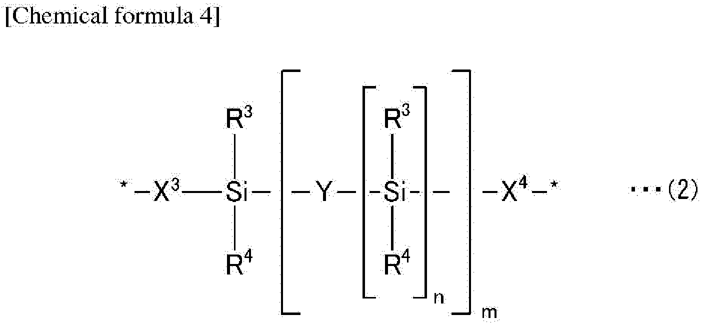

X³ is a divalent condensed polycyclic aromatic ring group with or without a substituent, and X⁴ is a divalent condensed polycyclic aromatic ring group with or without a substituent or a single bond. X³ and X⁴ may be the same or different. The divalent condensed polycyclic aromatic ring group is a group obtained by removing two hydrogen atoms from a condensed polycyclic aromatic ring. Rings constituting the condensed polycyclic aromatic ring group may include only an aromatic ring, a heteroaromatic ring, or an aromatic ring and a heteroaromatic ring. Rings constituting the condensed polycyclic aromatic ring group preferably include only an aromatic ring.

The number of rings in the condensed polycyclic aromatic ring is 2 or more. The number of rings is more preferably 4 or more. The number of rings in the condensed polycyclic aromatic ring is preferably 9 or less. More preferably, the number of rings in the condensed polycyclic aromatic ring is 6 or less. The condensed polycyclic aromatic ring group is preferably formed by condensation of 2 to 6 aromatic rings, and particularly preferably formed by condensation of 4 aromatic rings.

When the condensed polycyclic aromatic ring constituting the divalent condensed polycyclic aromatic ring group is a condensed polycyclic hydrocarbon, examples of the condensed polycyclic hydrocarbon include pentalene, indene, naphthalene, azulene, heptalene, biphenylene, as-indacene, s-indacene, acenaphthylene, fluorene, phenalene, phenanthrene, anthracene, fluoranthene, acephenanthrylene, aceanthrylene, triphenylene, pyrene, chrysene, tetracene, pleiadene, picene, perylene, pentaphene, pentacene, tetraphenylene, and hexaphene. The condensed polycyclic hydrocarbon is preferably, for example, pyrene. In this case, the divalent condensed polycyclic aromatic ring group is a pyrenylene group.

When the condensed polycyclic aromatic ring constituting the divalent condensed polycyclic aromatic ring group is a condensed heterocyclic ring, examples of the condensed heterocyclic ring include indole, indoline, indazole, chromene, quinoline, isoquinoline, phthalazine, quinazoline, quinoxaline, carbazole, phenazine, phenanthridine, and phenoxazine.

A hydrogen atom in the ring structure of the divalent condensed polycyclic aromatic ring group may be replaced. A substituent with which a hydrogen atom in the ring structure is replaced is not particularly limited as long as photoreaction is not suppressed. Examples of the substituent include an alkyl group, an alkoxy group, a carboxyl group, a hydroxy group, a cyano group, and a nitro group. The number of substituents is not particularly limited as long as photoreaction is not suppressed. For example, the number of substituents in the divalent condensed polycyclic aromatic ring group is 1 to 4.

Each of R³ and R⁴ is an alkyl group or an alkoxy group. R³ and R⁴ may be the same or different. Examples of the alkyl group include a methyl group, an ethyl group, a propyl group, an isopropyl group, a butyl group, an isobutyl group, an s-butyl group, a t-butyl group, a pentyl group, a hexyl group, a heptyl group, an octyl group, a nonyl group, and a decyl group, and a linear lower alkyl group is preferable. When each of R³ and R⁴ is an alkyl group, the alkyl group is preferably a methyl group or an ethyl group. Examples of the alkoxy group include a methoxy group, an ethoxy group, a propoxy group, an isopropoxy group, a butoxy group, an isobutoxy group, an s-butoxy group, a t-butoxy group, a pentyloxy group, a hexyloxy group, a heptyloxy group, an octyloxy group, a nonyloxy group, and a decyloxy group, and a linear lower alkoxy group is preferable. When each of R³ and R⁴ is an alkoxy group, the alkoxy group is preferably a methoxy group or an ethoxy group. By using a linear lower alkyl group such as a methyl group or an ethyl group or a linear lower alkoxy group such as a methoxy group or an ethoxy group for each of R³ and R⁴, an influence of steric hindrance can be reduced.

"Functional group capable of being bonded to another compound"

The "functional group capable of being bonded to another compound" of the reactive compound is not particularly limited as long as the functional group can be bonded to another compound. The functional group may be directly bonded to the divalent condensed polycyclic aromatic ring group or may be bonded to the divalent condensed polycyclic aromatic ring group via another functional group (that is, a substituent). The number of the functional groups is 2 or more. By having the 2 or more functional groups, the reactive compound of the present disclosure functions as a polymer crosslinking agent. Note that, as described in description of other embodiments below, by having the one functional polymerizable group, the reactive compound of the present disclosure functions as a polymer modifier.

The functional group has at least one selected from the group consisting of a hydroxy group, a carboxyl group, an amino group, an isocyanate group, an isothiocyanate group, an N-hydroxysuccinimide group, an epoxy group, an alkynyl group, an azide group, a thiol group, an alkenyl group, a (meth)acrylamide group, a (meth)acryloyl group, a cycloalkenyl group, an arylalkenyl group, and a norbornene group. Here, "(meth)acrylamide" represents acrylamide and methacrylamide. "(Meth)acryloyl" represents acryloyl and methacryloyl.

Examples of the functional group having a hydroxy group include a hydroxymethyl group, a hydroxyethyl group, a hydroxypropyl group, a hydroxybutyl group, a hydroxypentyl group, a hydroxyhexyl group, a hydroxycyclopropyl group, and a hydroxyphenyl group.

Examples of the functional group having a carboxyl group include a carboxymethyl group, a carboxyethyl group, a carboxypropyl group, a carboxybutyl group, a carboxypentyl group, a carboxyhexyl group, a carboxycyclopropyl group, and a carboxyphenyl group.

Examples of the functional group having an amino group include an aminomethyl group, an aminoethyl group, an aminopropyl group, an aminobutyl group, an aminopentyl group, an aminohexyl group, an aminocyclopropyl group, and an aminophenyl group.

Examples of the functional group having an isocyanate group include an isocyanate methyl group, an isocyanate ethyl group, an isocyanate propyl group, an isocyanate butyl group, an isocyanate pentyl group, an isocyanate hexyl group, and an isocyanate phenyl group.

Examples of the functional group having an isothiocyanate group include an isothiocyanate group, a methyl isothiocyanate methyl group, an isothiocyanate ethyl group, an isothiocyanate propyl group, an isothiocyanate butyl group, an isothiocyanate pentyl group, an isothiocyanate hexyl group, an isothiocyanate cyclopropyl group, and an isothiocyanate phenyl group.

Examples of the functional group having an N-hydroxysuccinimide group include an NHS ester group which is a functional group obtained by activating a general ester with N-hydroxysuccinimide (NHS).

Examples of the functional group having an epoxy group include a glycidyl group and a methylglycidyl group.

When the functional group is an alkynyl group, examples of the alkynyl group include an ethynyl group, an acetylenyl group, a 1-propynyl group, a propargyl group, a 1-butynyl group, a 3-butynyl group, a 1-pentynyl group, a 1-hexynyl group, and a 1-heptynyl group.

Examples of the functional group having an azide group include an azidomethyl group, an azidoethyl group, an azidopropyl group, an azidobutyl group, an azidopentyl group, an azidohexyl group, an azidocyclopropyl group, and an azidophenyl group.

Examples of the functional group having a thiol group include a thiol methyl group, a thiol ethyl group, a thiol propyl group, a thiol butyl group, a thiol pentyl group, a thiol hexyl group, a thiol cyclopropyl group, and a thiophenol group.

When the functional group is an alkenyl group, examples of the alkenyl group include a vinyl group, an allyl group, a 1-propenyl group, an isopropenyl group, a 2-butenyl group, and a 1,3-butadienyl group.

Examples of the functional group having a (meth)acrylamide group include a (meth)acrylamidomethyl group, a (meth)acrylamidoethyl group, a (meth)acrylamidopropyl group, a (meth)acrylamidobutyl group, and a (meth)acrylamidomethylpropyl group.

Examples of the functional group having a (meth)acryloyl group include a (meth)acryloylmethyl group, a (meth)acryloylethyl group, a (meth)acryloylpropyl group, and a 2-propyl (meth)(meth)acryloylbutyl group.

When the functional group is a cycloalkenyl group, examples of the cycloalkenyl group include a cyclopropenyl group, a cyclobutenyl group, a cyclopentenyl group, and a cyclohexenyl group.

Examples of the functional group having an arylalkenyl group include a styryl group and a styrylmethyl group.

Examples of the functional group having a norbornene group include a methylnorbornene group, an ethylnorbornene group, and a butylnorbornene group.

The functional group may have 2 or more functional groups. When the functional group has 2 or more functional groups, examples of the functional group include a diol group, a dicarboxyl group, a diamino group, and a diisocyanate group.

Reaction between the functional group and a functional group of another compound is not particularly limited as long as a bond can be formed. Examples the reaction include a reaction between an azide group and an alkynyl group and a reaction between an alkenyl group and a thiol group. The functional group can be appropriately selected according to the type of a functional group in a side chain of a polymer or the like or the type of polymerization reaction during polymer polymerization.

### (Method for producing polymer compound according to first embodiment)

A method for producing the polymer compound according to the first embodiment will be described. The method for producing the polymer compound according to the first embodiment includes a step of forming a crosslinked part by chemically bonding a functional group of the reactive compound according to the first embodiment to a functional group capable of being bonded to another compound, included in a polymer compound as a main chain (crosslinked part forming method).

### "Crosslinked part forming method"

The crosslinked part forming method is not particularly limited as long as main chains can be crosslinked. For example, a functional group in a side chain of the polymer compound constituting the main chain may be chemically bonded to the functional group of the reactive compound according to the first embodiment. Alternatively, a functional group of the polymer compound constituting the main chain may be chemically bonded to a functional group of the reactive compound according to the first embodiment by bonding a raw material (polymerizable monomer) of the polymer compound constituting the main chain and the reactive compound according to the first embodiment together. Since the reactive compound according to the first embodiment has the 2 or more functional groups, a crosslinked part is formed between the main chains. Here, a method for polymerizing a polymerizable monomer and the reactive compound according to the first embodiment together will be described, but the present invention is not limited to the following method. Note that, when a functional group of the reactive compound is chemically bonded to a functional group in a side chain, a known method can be used.

### (Reactive compound according to first embodiment)

A functional group of the reactive compound according to the first embodiment can be appropriately selected according to polymerization reaction of the main chain. When a main chain polymer is synthesized by radical polymerization, the functional group of the reactive compound is a radically polymerizable functional group. Examples of the reactive compound used in the radical polymerization include ((((dimethylsilanediyl) bis(pyrene-6,1-diyl)) bis(4,1-phenytene)) bis(oxy)) bis(ethane-2,1-diyl) diacrylate represented by the following formula (3).

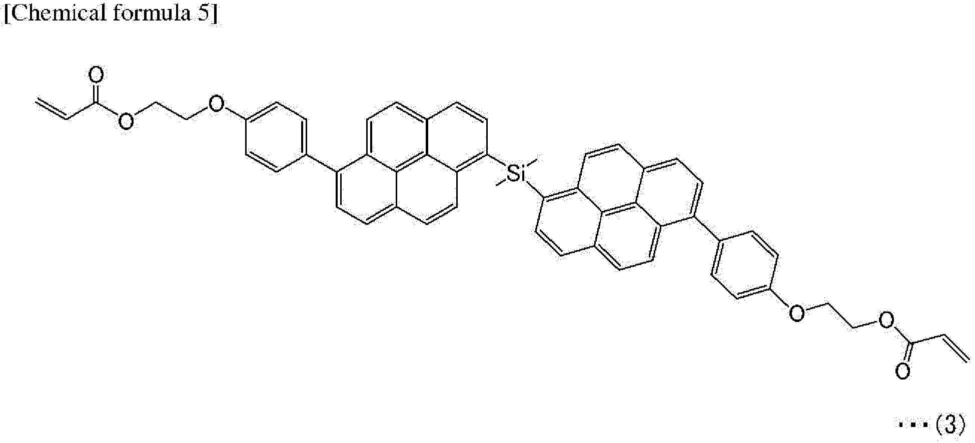

The polymerizable monomer as a raw material of the main chain polymer is not particularly limited. In a case of ring-opening polymerization, examples of the polymerizable monomer include norbornene, acetylnorbornene, ethylene oxide, propylene oxide, ethyleneimine, trimethylene oxide, tetrahydrofuran, β-propiolactone, γ-butyrolactone, and s-caprolactone.

In a case of radical polymerization, examples of the polymerizable monomer include: an ethylene; a vinylaryl monomer such as styrene, α-methylstyrene, o-chlorostyrene, or vinyltoluene; an ester of a monocarboxylic acid having 1 to 18 carbon atoms and a vinyl alcohol, such as vinyl acetate, vinyl propionate, vinyl-n-butyrate, vinyl laurate, or vinyl stearate; an α,β-monoethylenically unsaturated monocarboxylic acid or dicarboxylic acid having 3 to 6 carbon atoms, such as acrylic acid, methacrylic acid, maleic acid, fumaric acid, or itaconic acid; an ester of an alkanol having 1 to 12 carbon atoms and an α,β-monoethylenically unsaturated monocarboxylic acid or dicarboxylic acid, such as methyl acrylate, methyl methacrylate, ethyl acrylate, ethyl methacrylate, n-butyl acrylate, n-butyl methacrylate, isobutyl acrylate, isobutyl methacrylate, 2-ethylhexyl acrylate, 2-ethylhexyl methacrylate, dimethyl maleate, or di-n-butyl maleate; an acrylic acid aryl ester such as benzyl acrylate; a nitrile of an α,β-monoethylenically unsaturated carboxylic acid, such as acrylonitrile; an acrylamide such as N-isopropylacrylamide or hydroxyethylacrylamide; a hydroxy group-containing acrylate such as 2-hydroxyethyl acrylate; and a C4 to C8 conjugated diene such as 1,3-butadiene or isoprene. In a case of radical polymerization, the polymerizable monomer is preferably one or more selected from the group consisting of acrylic acid, methyl methacrylate, methyl acrylate, ethyl acrylate, benzyl methacrylate, 2-hydroxyethyl acrylate, and N-isopropylacrylamide.

Examples of other polymerizable monomers include: a polyvalent carboxylic acid monomer such as fumaric acid, maleic acid, mesaconic acid, succinic acid, citric acid, terephthalic acid, or isophthalic acid; a polyvalent alcohol monomer such as ethylene glycol, propylene glycol, butanediol, diethylene glycol, or hexanediol; a silane-based monomer such as dimethyldichlorosilane; and a polyvalent isocyanate such as 2,4-tolylene diisocyanate, 2,6-tolylene diisocyanate, 4,4'-diphenylmethane diisocyanate, isophorone diisocyanate, 1,3-cyclohexane diisocyanate, 1,4-cyclohexane diisocyanate, or 1,6-hexamethylene diisocyanate.

When a single monomer can be polymerized in polymer synthesis, the above-described polymerizable monomer may be used singly, or two or more types thereof may be used to form a random copolymer.

A catalyst or an initiator may be used for the bonding reaction between the polymerizable monomer and the reactive compound. The catalyst or the initiator is not particularly limited as long as a polymer compound can be synthesized from the polymerizable monomer and the reactive compound. Examples of the catalyst include a Grubb's catalyst, a Hoveyda-Grubb's catalyst, a Ru complex, tungsten chloride, and tetramethyltin. Examples of the initiator include azobisisobutyronitrile, benzoyl peroxide, di-tert-butyl peroxide, a hydrogen peroxide-iron (II) salt, persulfate-sodium bisulfite, and triethylborane.

The polymer compound according to the first embodiment can be obtained by adding the polymerizable monomer, the reactive compound according to the first embodiment, and as necessary, a catalyst, an initiator, or the like, and performing copolymerization.

### (Method for decomposing polymer compound according to first embodiment)

A method for decomposing the polymer compound according to the first embodiment includes a step of decomposing a cleavable structure by light irradiation in the presence of an acid.

### "Acid condition"

The type of the acid is not particularly limited as long as the cleavable structure can be decomposed by light irradiation in the presence of the acid. As the acid, a Brønsted acid can be used. Specific examples of the acid include: a hydrogen halide such as hydrogen chloride or hydrogen bromide; an oxoacid such as sulfuric acid or nitric acid; and an organic acid such as acetic acid or sulfonic acid.

The concentration of the acid is not particularly limited. The higher the concentration of the acid, the more decomposition reaction proceeds.

A method for introducing the acid is not particularly limited. The acid may be directly given to a polymer compound together with light irradiation or may be indirectly given to the polymer compound together with light irradiation. When the acid is indirectly given, the acid is preferably given in an inactive state in advance. Here, the inactive state refers to a state in which cooperative action between light irradiation and the acid does not occur even when the light irradiation is performed. Examples of a method for directly giving the acid include a method for immersing the polymer compound according to the first embodiment in an acid solution and a method for introducing a gaseous acid into a container containing the polymer compound according to the first embodiment. Examples of a method for indirectly giving the acid in an inactive state include a method in which the acid is introduced in a state in which a polymer compound (gel) is swollen, the acid is incorporated into the polymer compound, and then the swollen polymer compound is dried. By drying the polymer compound, action of the acid in the polymer compound is suppressed. This makes it possible to suppress cooperative action between the light irradiation and the acid.

### "Light irradiation condition"

An absorption wavelength region of the cleavable structure is preferably used as a wavelength of irradiation light. By irradiation with light in the absorption wavelength region, a bond in the cleavable structure can be cleaved by cooperative action between light irradiation and an acid. The intensity of light is not particularly limited. Note that the higher the intensity of light, the more decomposition reaction proceeds.

### "Reaction time"

The longer reaction time, the more decomposition reaction proceeds. The reaction time can be appropriately set according to the strength of an acid, the concentration of the acid, and the intensity of light. The stronger the acid, the higher the concentration of the acid, and the higher the intensity of irradiation light, the shorter the reaction time can be.

### "Treatment after reaction"

A method for removing the acid after the decomposition reaction is completed is not particularly limited. For example, the acid after the decomposition reaction may be removed by immersing the polymer compound in an acid-free solution, or the acid may be removed by placing the polymer compound after the decomposition reaction under a reduced pressure environment.

The polymer compound according to the first embodiment has been described in detail above. The polymer compound according to the present embodiment can cleave a bond by being irradiated with light in the presence of an acid, and therefore can be optically processed. In addition, since cleavage of the bond does not occur in the absence of an acid even when the polymer compound is irradiated with light, the polymer compound according to the first embodiment is stable under ambient light. In addition, the cleavable structure of the polymer compound according to the first embodiment uses silicon and is therefore inexpensive.

### (Second Embodiment)

Next, a polymer compound according to a second embodiment of the present invention will be described.

### (Polymer compound according to second embodiment)

A polymer compound according to a second embodiment of the present invention has a structure in which a conjugated carbon atom of a condensed polycyclic aromatic ring group and a silicon atom are bonded to each other in a bond-cleavable form by cooperative action between light irradiation and an acid. The polymer compound according to the second embodiment has a main chain and a side chain.

### "Side chain"

The polymer compound of the second embodiment has a cleavable structure in a side chain. By irradiating the cleavable structure with light in the presence of an acid, the bond between the conjugated carbon atom and the silicon atom is cleaved, whereby optical processing is possible. The polymer compound according to the second embodiment is stable under ambient light because a bond between a conjugated carbon atom and a silicon atom is not cleaved without an acid even when being irradiated with light. A side chain site on a side where the bond is cleaved and removed may have a liquid crystalline functional group, a luminescent functional group, a heavy atom, or the like.

The structure in which a conjugated carbon atom and a silicon atom are bonded to each other in a bond-cleavable form by cooperative action between light irradiation and an acid is preferably a structure represented by the above formula (1). In the second embodiment, in the above formula (1), X¹ is a monovalent or divalent condensed polycyclic aromatic ring group with or without a substituent, X² is a divalent condensed polycyclic aromatic ring group with or without a substituent or a single bond, Y is a single bond, an oxygen atom, or an alkylene group, R¹ is an alkyl group or an alkoxy group, R² is an alkyl group or an alkoxy group, n is 0 or 1, m is an integer of 0 to 5, and * is a bond. Note that, when Y is a single bond, n is 0, and when Y is an oxygen atom and n is 0, m is 1. Note that, in the polymer compound according to the second embodiment, when X¹ is a monovalent condensed polycyclic aromatic ring group without a substituent, the bond of X¹ is bonded to a hydrogen atom in the ring structure, m may be 0 or 1.

X¹ is a monovalent or divalent condensed polycyclic aromatic ring group with or without a substituent. X² is a divalent condensed polycyclic aromatic ring group with or without a substituent or a single bond. The condensed polycyclic aromatic rings in the condensed polycyclic aromatic ring groups of X¹ and X² may be the same or different. Here, the monovalent condensed polycyclic aromatic ring group is a group obtained by removing one hydrogen atom from a condensed polycyclic aromatic ring. Rings constituting the condensed polycyclic aromatic ring group may include only an aromatic ring, a heteroaromatic ring, or an aromatic ring and a heteroaromatic ring. Rings constituting the condensed polycyclic aromatic ring group preferably include only an aromatic ring.

The number of rings in the condensed polycyclic aromatic ring is 2 or more. The number of rings is more preferably 4 or more. The number of rings in the condensed polycyclic aromatic ring is preferably 9 or less. More preferably, the number of rings in the condensed polycyclic aromatic ring is 6 or less. The condensed polycyclic aromatic ring group is preferably formed by condensation of 2 to 6 aromatic rings, and particularly preferably formed by condensation of 4 aromatic rings.

When the condensed polycyclic aromatic ring constituting the monovalent or divalent condensed polycyclic aromatic ring group is a condensed polycyclic hydrocarbon, examples of the condensed polycyclic hydrocarbon include pentalene, indene, naphthalene, azulene, heptalene, biphenylene, as-indacene, s-indacene, acenaphthylene, fluorene, phenalene, phenanthrene, anthracene, fluoranthene, acephenanthrylene, aceanthrylene, triphenylene, pyrene, chrysene, tetracene, pleiadene, picene, perylene, pentaphene, pentacene, tetraphenylene, and hexaphene. The condensed polycyclic hydrocarbon is preferably, for example, pyrene. In a case of pyrene, the divalent condensed polycyclic aromatic ring group is a pyrenylene group. The monovalent condensed polycyclic aromatic ring group is a pyrenyl group.

When the condensed polycyclic aromatic ring constituting the monovalent or divalent condensed polycyclic aromatic ring group is a condensed heterocyclic ring, examples of the condensed heterocyclic ring include indole, indoline, indazole, chromene, quinoline, isoquinoline, phthalazine, quinazoline, quinoxaline, carbazole, phenazine, phenanthridine, and phenoxazine.

A hydrogen atom in the ring structure of the monovalent or divalent condensed polycyclic aromatic ring group may be replaced. A substituent with which a hydrogen atom in the ring structure is replaced is not particularly limited as long as photoreaction is not suppressed. Examples of the substituent include an alkyl group, an alkoxy group, a carboxyl group, a hydroxy group, a cyano group, and a nitro group. The number of substituents is not particularly limited as long as photoreaction is not suppressed. For example, the number of substituents in the divalent condensed polycyclic aromatic ring group is 1 to 4.

Each of R¹ and R² is an alkyl group or an alkoxy group. R¹ and R² may be the same or different. Examples of the alkyl group include a methyl group, an ethyl group, a propyl group, an isopropyl group, a butyl group, an isobutyl group, an s-butyl group, a t-butyl group, a pentyl group, a hexyl group, a heptyl group, an octyl group, a nonyl group, and a decyl group, and a linear lower alkyl group is preferable. When each of R¹ and R² is an alkyl group, the alkyl group is preferably a methyl group or an ethyl group. Examples of the alkoxy group include a methoxy group, an ethoxy group, a propoxy group, an isopropoxy group, a butoxy group, an isobutoxy group, an s-butoxy group, a t-butoxy group, a pentyloxy group, a hexyloxy group, a heptyloxy group, an octyloxy group, a nonyloxy group, and a decyloxy group, and a linear lower alkoxy group is preferable. When each of R¹ and R² is an alkoxy group, the alkoxy group is preferably a methoxy group or an ethoxy group. By using a linear lower alkyl group such as a methyl group or an ethyl group or a linear lower alkoxy group such as a methoxy group or an ethoxy group for each of R¹ and R², an influence of steric hindrance can be reduced.

### "Main chain"

The structure of the main chain of the polymer compound according to the second embodiment is not particularly limited. Examples of the main chain polymer include a polymer of a polymerizable monomer. Reaction is not particularly limited, and sequential polymerization such as polycondensation or polyaddition, radical polymerization, ring-opening polymerization, click reaction, and the like can be used. As the main chain, the main chain polymer exemplified in the first embodiment can be used.

### <Reactive compound according to second embodiment>

A reactive compound according to the second embodiment has a structure (cleavable structure) in which a conjugated carbon atom of a condensed polycyclic aromatic ring group and a silicon element are bonded to each other in a bond-cleavable form by cooperative action between light irradiation and an acid, and one or more functional groups, preferably one functional group capable of being bonded to another compound. The reactive compound according to the second embodiment has one or more functional groups, preferably one functional group, and therefore can be used as a polymer modifier. The reactive compound according to the second embodiment may have a liquid crystalline functional group, a luminescent functional group, a heavy atom, or the like. Each portion will be described below.

### "Cleavable structure"

The cleavable structure of the reactive compound is preferably a structure represented by the above formula (2). In the second embodiment, in the above formula (2), X³ is a monovalent or divalent condensed polycyclic aromatic ring group with or without a substituent, X⁴ is a divalent condensed polycyclic aromatic ring group with or without a substituent or a single bond, Y is a single bond, an oxygen atom, or an alkylene group, R³ is an alkyl group or an alkoxy group, R⁴ is an alkyl group or an alkoxy group, n is 0 or 1, m is an integer of 0 to 5, and * is a bond. Note that, when Y is a single bond, n is 0, and when Y is an oxygen atom and n is 0, m is 1. Each of the bonds of X³ and X⁴ may be bonded to a functional group capable of being bonded to another compound or may be bonded to another functional group or the like. Note that, in the reactive compound according to the second embodiment, when X³ is a monovalent condensed polycyclic aromatic ring group without a substituent, the bond of X³ is bonded to a hydrogen atom in the ring structure. m may be 0 or 1.

X³ is a monovalent or divalent condensed polycyclic aromatic ring group with or without a substituent, and X⁴ is a divalent condensed polycyclic aromatic ring group with or without a substituent or a single bond. The condensed polycyclic aromatic rings in the condensed polycyclic aromatic ring groups of X³ and X⁴ may be the same or different. Rings constituting the condensed polycyclic aromatic ring group may include only an aromatic ring, a heteroaromatic ring, or an aromatic ring and a heteroaromatic ring. Rings constituting the condensed polycyclic aromatic ring group preferably include only an aromatic ring.

The number of rings in the condensed polycyclic aromatic ring is 2 or more. The number of rings is more preferably 4 or more. The number of rings in the condensed polycyclic aromatic ring is preferably 9 or less. More preferably, the number of rings in the condensed polycyclic aromatic ring is 6 or less. The condensed polycyclic aromatic ring group is preferably formed by condensation of 2 to 6 aromatic rings, and particularly preferably formed by condensation of 4 aromatic rings.

When the condensed polycyclic aromatic ring constituting the monovalent or divalent condensed polycyclic aromatic ring group is a condensed polycyclic hydrocarbon, examples of the condensed polycyclic hydrocarbon include pentalene, indene, naphthalene, azulene, heptalene, biphenylene, as-indacene, s-indacene, acenaphthylene, fluorene, phenalene, phenanthrene, anthracene, fluoranthene, acephenanthrylene, aceanthrylene, triphenylene, pyrene, chrysene, tetracene, pleiadene, picene, perylene, pentaphene, pentacene, tetraphenylene, and hexaphene. The condensed polycyclic hydrocarbon is preferably, for example, pyrene. In this case, the divalent condensed polycyclic aromatic ring group is a pyrenylene group.

When the condensed polycyclic aromatic ring constituting the monovalent or divalent condensed polycyclic aromatic ring group is a condensed heterocyclic ring, examples of the condensed heterocyclic ring include indole, indoline, indazole, chromene, quinoline, isoquinoline, phthalazine, quinazoline, quinoxaline, carbazole, phenazine, phenanthridine, and phenoxazine.

A hydrogen atom in the ring structure of the monovalent or divalent condensed polycyclic aromatic ring group may be replaced. A substituent with which a hydrogen atom in the ring structure is replaced is not particularly limited as long as photoreaction is not suppressed. Examples of the substituent include an alkyl group, an alkoxy group, a carboxyl group, a hydroxy group, a cyano group, and a nitro group. The number of substituents is not particularly limited as long as photoreaction is not suppressed. For example, the number of substituents in the divalent condensed polycyclic aromatic ring group is 1 to 4.

Each of R³ and R⁴ is an alkyl group or an alkoxy group. R³ and R⁴ may be the same or different. Examples of the alkyl group include a methyl group, an ethyl group, a propyl group, an isopropyl group, a butyl group, an isobutyl group, an s-butyl group, a t-butyl group, a pentyl group, a hexyl group, a heptyl group, an octyl group, a nonyl group, and a decyl group, and a linear lower alkyl group is preferable. When each of R³ and R⁴ is an alkyl group, the alkyl group is preferably a methyl group or an ethyl group. Examples of the alkoxy group include a methoxy group, an ethoxy group, a propoxy group, an isopropoxy group, a butoxy group, an isobutoxy group, an s-butoxy group, a t-butoxy group, a pentyloxy group, a hexyloxy group, a heptyloxy group, an octyloxy group, a nonyloxy group, and a decyloxy group, and a linear lower alkoxy group is preferable. When each of R³ and R⁴ is an alkoxy group, the alkoxy group is preferably a methoxy group or an ethoxy group. By using a linear lower alkyl group such as a methyl group or an ethyl group or a linear lower alkoxy group such as a methoxy group or an ethoxy group for each of R³ and R⁴, an influence of steric hindrance can be reduced.

### "Functional group capable of being bonded to another compound"

The "functional group capable of being bonded to another compound" of the reactive compound is not particularly limited as long as the functional group can be bonded to a functional group of a side chain in the polymer compound according to the second embodiment or can form a chemical bond with a raw material of a main chain polymer constituting a main chain. As the functional group, those exemplified as the functional group of the reactive compound according to the first embodiment can be used.

### (Method for producing polymer compound according to second embodiment)

A method for producing the polymer compound according to the second embodiment will be described. The method for producing the polymer compound according to the second embodiment includes a step of modifying a polymer compound as a main chain by chemically bonding a functional group of the reactive compound according to the second embodiment to a functional group capable of being bonded to another compound, included in the polymer compound (polymer modifying method).

### "Polymer modifying method"

The polymer modifying method is not particularly limited as long as a cleavable structure can be introduced into a side chain of a polymer compound. For example, a functional group in a side chain of the polymer compound constituting the main chain may be chemically bonded to the functional group of the reactive compound according to the second embodiment. Alternatively, a functional group of a polymer compound constituting a main chain may be chemically bonded to a functional group of the reactive compound according to the second embodiment by polymerizing a raw material (polymerizable monomer) of the polymer compound constituting the main chain and the reactive compound according to the second embodiment together. Since the reactive compound according to the second embodiment has one or more functional groups, a cleavable structure can be introduced into a side chain. Here, a method for polymerizing a polymerizable monomer and the reactive compound according to the second embodiment together will be described, but the present invention is not limited to the following method. Note that, when a polymerizable group of the reactive compound is chemically bonded to a functional group of a side chain, a known method can be used.

### (Reactive compound according to second embodiment)

A functional group of the reactive compound according to the second embodiment can be appropriately selected according to polymerization reaction of the main chain. When a main chain polymer is synthesized by radical polymerization, the reactive compound has a radically polymerizable functional group.

The polymerizable monomer as a raw material of the main chain polymer is not particularly limited. In a case of ring-opening polymerization, examples of the polymerizable monomer include norbornene, acetylnorbornene, ethylene oxide, propylene oxide, ethyleneimine, trimethylene oxide, tetrahydrofuran, β-propiolactone, γ-butyrolactone, and ε-caprolactone.

In a case of radical polymerization, examples of the polymerizable monomer include: an ethylene; a vinylaryl monomer such as styrene, α-methylstyrene, o-chlorostyrene, or vinyltoluene; an ester of a monocarboxylic acid having 1 to 18 carbon atoms and a vinyl alcohol, such as vinyl acetate, vinyl propionate, vinyl-n-butyrate, vinyl laurate, or vinyl stearate; an α,β-monoethylenically unsaturated monocarboxylic acid or dicarboxylic acid having 3 to 6 carbon atoms, such as acrylic acid, methacrylic acid, maleic acid, fumaric acid, or itaconic acid; an ester of an alkanol having 1 to 12 carbon atoms and an α,β-monoethylenically unsaturated monocarboxylic acid or dicarboxylic acid, such as methyl acrylate, methyl methacrylate, ethyl acrylate, ethyl methacrylate, n-butyl acrylate, n-butyl methacrylate, isobutyl acrylate, isobutyl methacrylate, 2-ethylhexyl acrylate, 2-ethylhexyl methacrylate, dimethyl maleate, or di-n-butyl maleate; an acrylic acid aryl ester such as benzyl acrylate; a nitrile of an α,β-monoethylenically unsaturated carboxylic acid, such as acrylonitrile; an acrylamide such as N-isopropylacrylamide or hydroxyethylacrylamide; a hydroxy group-containing acrylate such as 2-hydroxyethyl acrylate; and a C4 to C8 conjugated diene such as 1,3-butadiene or isoprene. In a case of radical polymerization, the polymerizable monomer is preferably one or more selected from the group consisting of acrylic acid, methyl methacrylate, methyl acrylate, ethyl acrylate, benzyl methacrylate, 2-hydroxyethyl acrylate, and N-isopropylacrylamide.

Examples of other polymerizable monomers include: a polyvalent carboxylic acid monomer such as fumaric acid, maleic acid, mesaconic acid, succinic acid, citric acid, terephthalic acid, or isophthalic acid; a polyvalent alcohol monomer such as ethylene glycol, propylene glycol, butanediol, diethylene glycol, or hexanediol; a silane-based monomer such as dimethyldichlorosilane; and a polyvalent isocyanate such as 2,4-tolylene diisocyanate, 2,6-tolylene diisocyanate, 4,4'-diphenylmethane diisocyanate, isophorone diisocyanate, 1,3-cyclohexane diisocyanate, 1,4-cyclohexane diisocyanate, or 1,6-hexamethylene diisocyanate.

When a single monomer can be polymerized in polymer synthesis, the above-described monomer may be used singly, or two or more types thereof may be used to form a random copolymer.

For the polymerization reaction between the polymerizable monomer and the reactive compound, a catalyst or an initiator may be used according to the type of the polymerization reaction. The catalyst or the initiator is not particularly limited if a polymer compound can be synthesized from the polymerizable monomer and the reactive compound. Examples of the catalyst include a Grubb's catalyst, a Hoveyda-Grubb's catalyst, a Ru complex, tungsten chloride, and tetramethyltin. Examples of the initiator include azobisisobutyronitrile, benzoyl peroxide, di-tert-butyl peroxide, a hydrogen peroxide-iron (II) salt, persulfate-sodium bisulfite, and triethylborane.

The polymer compound according to the second embodiment can be obtained by adding the polymerizable monomer, the reactive compound according to the second embodiment, and as necessary, a catalyst, an initiator, or the like, and performing copolymerization.

### (Method for controlling characteristics of polymer compound according to second embodiment)

A method for controlling characteristics of the polymer compound according to the second embodiment includes a step of decomposing a cleavable structure by light irradiation in the presence of an acid. As a light irradiation condition and an acid introduction condition, the conditions of the method for decomposing the polymer compound of the first embodiment can be used. By irradiating the polymer compound according to the second embodiment with light in the presence of an acid, a side chain having a cleavable structure can be cleaved. As a result, characteristics such as a luminescence characteristic, a polarization characteristic, and a refractive index can be changed.

The polymer compound according to the second embodiment has been described in detail above. The polymer compound according to the second embodiment can cleave a bond by being irradiated with light in the presence of an acid, and therefore can be optically processed. The polymer compound of the second embodiment has a cleavable structure in a side chain. When a side chain site on a side where a bond is cleaved and removed has a liquid crystalline functional group, a luminescent functional group, a heavy atom, or the like, a site which affects the characteristics can be removed by being irradiated with light in the presence of an acid. As a result, characteristics such as a luminescence characteristic, a polarization characteristic, and a refractive index of the polymer compound can be adjusted. The polymer compound according to the second embodiment is stable under ambient light because a bond is not cleaved without an acid even when being irradiated with light. In addition, the cleavable structure of the polymer compound according to the second embodiment uses silicon and is therefore inexpensive.

### (Third Embodiment)

Next, a polymer compound according to a third embodiment of the present invention will be described.

### (Polymer compound according to third embodiment)

A polymer compound according to a third embodiment of the present invention has a structure in which a conjugated carbon atom of a condensed polycyclic aromatic ring group and a silicon atom are bonded to each other in a bond-cleavable form by cooperative action between light irradiation and an acid. The polymer compound according to the third embodiment has a main chain.

### "Main chain"

The polymer compound of the third embodiment has a cleavable structure in a main chain. By irradiating the cleavable structure with light in the presence of an acid, the bond between the conjugated carbon atom and the silicon atom is cleaved, whereby optical processing is possible. The polymer compound according to the third embodiment is stable under ambient light because a bond between a conjugated carbon atom and a silicon atom is not cleaved without an acid even when being irradiated with light. The cleavable structure may be at an end of the main chain or between the ends. In a case of introduction for the purpose of controlling a molecular weight, the cleavable structure is preferably between the ends.

The structure in which a conjugated carbon atom and a silicon atom are bonded to each other in a bond-cleavable form by cooperative action between light irradiation and an acid is preferably a structure represented by the above formula (1). In the third embodiment, in the above formula (1), X¹ is a monovalent or divalent condensed polycyclic aromatic ring group with or without a substituent, and X² is a divalent condensed polycyclic aromatic ring group with or without a substituent or a single bond. Y is a single bond, an oxygen atom, or an alkylene group, R¹ is an alkyl group or an alkoxy group, R² is an alkyl group or an alkoxy group, n is 0 or 1, m is an integer of 0 to 5, and * is a bond. Note that, when Y is a single bond, n is 0, and when Y is an oxygen atom and n is 0, m is 1. Note that, in the polymer compound according to the third embodiment, when the cleavable structure is at an end of the polymer compound according to the third embodiment and X¹ is a monovalent condensed polycyclic aromatic ring group without a substituent, the bond of X¹ is bonded to a hydrogen atom in the ring structure, m may be 0 or 1.

X¹ is a monovalent or divalent condensed polycyclic aromatic ring group with or without a substituent, and X² is a divalent condensed polycyclic aromatic ring group with or without a substituent or a single bond. The condensed polycyclic aromatic rings in the condensed polycyclic aromatic ring groups of X¹ and X² may be the same or different. Here, rings constituting the condensed polycyclic aromatic ring group may include only an aromatic ring, a heteroaromatic ring, or an aromatic ring and a heteroaromatic ring. Rings constituting the condensed polycyclic aromatic ring group preferably include only an aromatic ring.

The number of rings in the condensed polycyclic aromatic ring is 2 or more. The number of rings is more preferably 4 or more. The number of rings in the condensed polycyclic aromatic ring is preferably 9 or less. More preferably, the number of rings in the condensed polycyclic aromatic ring is 6 or less. The condensed polycyclic aromatic ring group is preferably formed by condensation of 2 to 6 aromatic rings, and particularly preferably formed by condensation of 4 aromatic rings.

When the condensed polycyclic aromatic ring constituting the monovalent or divalent condensed polycyclic aromatic ring group is a condensed polycyclic hydrocarbon, examples of the condensed polycyclic hydrocarbon include pentalene, indene, naphthalene, azulene, heptalene, biphenylene, as-indacene, s-indacene, acenaphthylene, fluorene, phenalene, phenanthrene, anthracene, fluoranthene, acephenanthrylene, aceanthrylene, triphenylene, pyrene, chrysene, tetracene, pleiadene, picene, perylene, pentaphene, pentacene, tetraphenylene, and hexaphene. The condensed polycyclic hydrocarbon is preferably, for example, pyrene. In a case of pyrene, the divalent condensed polycyclic aromatic ring group is a pyrenylene group. The monovalent condensed polycyclic aromatic ring group is a pyrenyl group.

When the condensed polycyclic aromatic ring constituting the monovalent or divalent condensed polycyclic aromatic ring group is a condensed heterocyclic ring, examples of the condensed heterocyclic ring include indole, indoline, indazole, chromene, quinoline, isoquinoline, phthalazine, quinazoline, quinoxaline, carbazole, phenazine, phenanthridine, and phenoxazine.

A hydrogen atom in the ring structure of the monovalent or divalent condensed polycyclic aromatic ring group may be replaced. A substituent with which a hydrogen atom in the ring structure is replaced is not particularly limited if photoreaction is not suppressed. Examples of the substituent include an alkyl group, an alkoxy group, a carboxyl group, a hydroxy group, a cyano group, and a nitro group. The number of substituents is not particularly limited if photoreaction is not suppressed. For example, the number of substituents in the divalent condensed polycyclic aromatic ring group is 1 to 4.

Each of R¹ and R² is an alkyl group or an alkoxy group. R¹ and R² may be the same or different. Examples of the alkyl group include a methyl group, an ethyl group, a propyl group, an isopropyl group, a butyl group, an isobutyl group, an s-butyl group, a t-butyl group, a pentyl group, a hexyl group, a heptyl group, an octyl group, a nonyl group, and a decyl group, and a linear lower alkyl group is preferable. When each of R¹ and R² is an alkyl group, the alkyl group is preferably a methyl group or an ethyl group. Examples of the alkoxy group include a methoxy group, an ethoxy group, a propoxy group, an isopropoxy group, a butoxy group, an isobutoxy group, an s-butoxy group, a t-butoxy group, a pentyloxy group, a hexyloxy group, a heptyloxy group, an octyloxy group, a nonyloxy group, and a decyloxy group, and a linear lower alkoxy group is preferable. When each of R¹ and R² is an alkoxy group, the alkoxy group is preferably a methoxy group or an ethoxy group. By using a linear lower alkyl group such as a methyl group or an ethyl group or a linear lower alkoxy group such as a methoxy group or an ethoxy group for each of R¹ and R², an influence of steric hindrance can be reduced.

### "Structure other than cleavable structure in main chain"

A structure other than the cleavable structure in the main chain of the polymer compound according to the third embodiment is not particularly limited. Examples of a polymer compound which can be used for the main chain include a polymer of a polymerizable monomer. Reaction is not particularly limited, and sequential polymerization such as polycondensation or polyaddition, radical polymerization, ring-opening polymerization, click reaction, and the like can be used. As the structure other than the cleavable structure in the main chain, the main chain polymer exemplified in the first embodiment can be used.

### <Reactive compound according to third embodiment>

A reactive compound according to the third embodiment has a structure (cleavable structure) in which a conjugated carbon atom of a condensed polycyclic aromatic ring group and a silicon element are bonded to each other in a bond-cleavable form by cooperative action between light irradiation and an acid, and one or more functional groups capable of being bonded to another compound. Since the reactive compound according to the third embodiment has one or more functional groups, a cleavable structure can be introduced into a main chain. Each portion will be described below.

### "Cleavable structure"

The cleavable structure of the reactive compound is preferably a structure represented by the above formula (2). In the above formula (2), X³ is a monovalent or divalent condensed polycyclic aromatic ring group with or without a substituent, X⁴ is a divalent condensed polycyclic aromatic ring group with or without a substituent or a single bond, Y is a single bond, an oxygen atom, or an alkylene group, R³ is an alkyl group or an alkoxy group, R⁴ is an alkyl group or an alkoxy group, n is 0 or 1, m is an integer of 0 to 5, and * is a bond. Note that, when Y is a single bond, n is 0, and when Y is an oxygen atom and n is 0, m is 1. m may be 0 or 1. Each of the bonds of X³ and X⁴ may be bonded to a functional group capable of being bonded to another compound or may be bonded to another functional group or the like. Note that, in the reactive compound according to the third embodiment, when X³ is a monovalent condensed polycyclic aromatic ring group without a substituent, the bond of X³ is bonded to a hydrogen atom in the ring structure.

X³ is a monovalent or divalent condensed polycyclic aromatic ring group with or without a substituent, and X⁴ is a divalent condensed polycyclic aromatic ring group with or without a substituent or a single bond. The condensed polycyclic aromatic rings in the condensed polycyclic aromatic ring groups of X³ and X⁴ may be the same or different. Rings constituting the condensed polycyclic aromatic ring group may include only an aromatic ring, a heteroaromatic ring, or an aromatic ring and a heteroaromatic ring. Rings constituting the condensed polycyclic aromatic ring group preferably include only an aromatic ring.

The number of rings in the condensed polycyclic aromatic ring is 2 or more. The number of rings is more preferably 4 or more. The number of rings in the condensed polycyclic aromatic ring is preferably 9 or less. More preferably, the number of rings in the condensed polycyclic aromatic ring is 6 or less. The condensed polycyclic aromatic ring group is preferably formed by condensation of 2 to 6 aromatic rings, and particularly preferably formed by condensation of 4 aromatic rings.

When the condensed polycyclic aromatic ring constituting the monovalent or divalent condensed polycyclic aromatic ring group is a condensed polycyclic hydrocarbon, examples of the condensed polycyclic hydrocarbon include pentalene, indene, naphthalene, azulene, heptalene, biphenylene, as-indacene, s-indacene, acenaphthylene, fluorene, phenalene, phenanthrene, anthracene, fluoranthene, acephenanthrylene, aceanthrylene, triphenylene, pyrene, chrysene, tetracene, pleiadene, picene, perylene, pentaphene, pentacene, tetraphenylene, and hexaphene. The condensed polycyclic hydrocarbon is preferably, for example, pyrene. In this case, the divalent condensed polycyclic aromatic ring group is a pyrenylene group.

When the condensed polycyclic aromatic ring constituting the monovalent or divalent condensed polycyclic aromatic ring group is a condensed heterocyclic ring, examples of the condensed heterocyclic ring include indole, indoline, indazole, chromene, quinoline, isoquinoline, phthalazine, quinazoline, quinoxaline, carbazole, phenazine, phenanthridine, and phenoxazine.

A hydrogen atom in the ring structure of the monovalent or divalent condensed polycyclic aromatic ring group may be replaced. A substituent with which a hydrogen atom in the ring structure is replaced is not particularly limited if photoreaction is not suppressed. Examples of the substituent include an alkyl group, an alkoxy group, a carboxyl group, a hydroxy group, a cyano group, and a nitro group. The number of substituents is not particularly limited if photoreaction is not suppressed. For example, the number of substituents in the divalent condensed polycyclic aromatic ring group is 1 to 4.

Each of R³ and R⁴ is an alkyl group or an alkoxy group. R³ and R⁴ may be the same or different. Examples of the alkyl group include a methyl group, an ethyl group, a propyl group, an isopropyl group, a butyl group, an isobutyl group, an s-butyl group, a t-butyl group, a pentyl group, a hexyl group, a heptyl group, an octyl group, a nonyl group, and a decyl group, and a linear lower alkyl group is preferable. When each of R³ and R⁴ is an alkyl group, the alkyl group is preferably a methyl group or an ethyl group. Examples of the alkoxy group include a methoxy group, an ethoxy group, a propoxy group, an isopropoxy group, a butoxy group, an isobutoxy group, an s-butoxy group, a t-butoxy group, a pentyloxy group, a hexyloxy group, a heptyloxy group, an octyloxy group, a nonyloxy group, and a decyloxy group, and a linear lower alkoxy group is preferable. When each of R³ and R⁴ is an alkoxy group, the alkoxy group is preferably a methoxy group or an ethoxy group. By using a linear lower alkyl group such as a methyl group or an ethyl group or a linear lower alkoxy group such as a methoxy group or an ethoxy group for each of R³ and R⁴, an influence of steric hindrance can be reduced.

### "Functional group capable of being bonded to another compound"

The "functional group capable of being bonded to another compound" of the reactive compound is not particularly limited if a cleavable structure can be introduced into the main chain of the polymer compound according to the third embodiment. As the functional group, those exemplified as the functional group of the reactive compound of the first embodiment can be used.

### (Method for producing polymer compound according to third embodiment)

A method for producing the polymer compound according to the third embodiment will be described. The method for producing the polymer compound according to the third embodiment includes a step of polymerizing a polymerizable monomer which is a raw material of the polymer compound as a main chain and the reactive compound according to the third embodiment (polymer compound polymerizing method).

### "Polymer compound polymerizing method"

A polymer synthesizing method is not particularly limited if a cleavable structure can be introduced into the main chain of the polymer compound. For example, a raw material (polymerizable monomer) of the polymer compound constituting the main chain is polymerized together with the reactive compound according to the third embodiment. Since the reactive compound according to the third embodiment has one or more functional groups, a cleavable structure can be introduced into the main chain.

### Reactive compound

A functional group of the reactive compound can be appropriately selected according to polymerization reaction of the main chain. When a main chain polymer is synthesized by radical polymerization, the reactive compound has a radically polymerizable functional group. When a cleavable structure is introduced into an end of the polymer compound, the number of functional groups is preferably 1. When a cleavable structure is introduced between ends, the number of functional groups is preferably 2 or more.

The polymerizable monomer as a raw material of the main chain polymer is not particularly limited. In a case of ring-opening polymerization, examples of the polymerizable monomer include norbornene, acetylnorbornene, ethylene oxide, propylene oxide, ethyleneimine, trimethylene oxide, tetrahydrofuran, β-propiolactone, γ-butyrolactone, and ε-caprolactone.

In a case of radical polymerization, examples of the polymerizable monomer include: an ethylene; a vinylaryl monomer such as styrene, α-methylstyrene, o-chlorostyrene, or vinyltoluene; an ester of a monocarboxylic acid having 1 to 18 carbon atoms and a vinyl alcohol, such as vinyl acetate, vinyl propionate, vinyl-n-butyrate, vinyl laurate, or vinyl stearate; an α,β-monoethylenically unsaturated monocarboxylic acid or dicarboxylic acid having 3 to 6 carbon atoms, such as acrylic acid, methacrylic acid, maleic acid, fumaric acid, or itaconic acid; an ester of an alkanol having 1 to 12 carbon atoms and an α,β-monoethylenically unsaturated monocarboxylic acid or dicarboxylic acid, such as methyl acrylate, methyl methacrylate, ethyl acrylate, ethyl methacrylate, n-butyl acrylate, n-butyl methacrylate, isobutyl acrylate, isobutyl methacrylate, 2-ethylhexyl acrylate, 2-ethylhexyl methacrylate, dimethyl maleate, or di-n-butyl maleate; an acrylic acid aryl ester such as benzyl acrylate; a nitrile of an α,β-monoethylenically unsaturated carboxylic acid, such as acrylonitrile; an acrylamide such as N-isopropylacrylamide or hydroxyethylacrylamide; a hydroxy group-containing acrylate such as 2-hydroxyethyl acrylate; and a C4 to C8 conjugated diene such as 1,3-butadiene or isoprene. In a case of radical polymerization, the polymerizable monomer is preferably one or more selected from the group consisting of acrylic acid, methyl methacrylate, methyl acrylate, ethyl acrylate, benzyl methacrylate, 2-hydroxyethyl acrylate, and N-isopropylacrylamide.

Examples of other polymerizable monomers include: a polyvalent carboxylic acid monomer such as fumaric acid, maleic acid, mesaconic acid, succinic acid, citric acid, terephthalic acid, or isophthalic acid; a polyvalent alcohol monomer such as ethylene glycol, propylene glycol, butanediol, diethylene glycol, or hexanediol; a silane-based monomer such as dimethyldichlorosilane; and a polyvalent isocyanate such as 2,4-tolylene diisocyanate, 2,6-tolylene diisocyanate, 4,4'-diphenylmethane diisocyanate, isophorone diisocyanate, 1,3-cyclohexane diisocyanate, 1,4-cyclohexane diisocyanate, or 1,6-hexamethylene diisocyanate.

When a single monomer can be polymerized in polymer synthesis, the above-described monomer may be used singly, or two or more types thereof may be used to form a random copolymer.

For the polymerization reaction between the polymerizable monomer and the reactive compound, a catalyst or an initiator may be used according to the type of the polymerization reaction. The catalyst or the initiator is not particularly limited if a polymer compound can be synthesized from the polymerizable monomer and the reactive compound. Examples of the catalyst include a Grubb's catalyst, a Hoveyda-Grubb's catalyst, a Ru complex, tungsten chloride, and tetramethyltin. Examples of the initiator include azobisisobutyronitrile, benzoyl peroxide, di-tert-butyl peroxide, a hydrogen peroxide-iron (II) salt, persulfate-sodium bisulfite, and triethylborane.

The polymer compound according to the third embodiment can be obtained by adding the polymerizable monomer, the reactive compound according to the third embodiment, and as necessary, a catalyst, an initiator, or the like, and performing copolymerization.

### (Method for adjusting molecular weight of polymer compound according to third embodiment)

A method for adjusting the molecular weight of the polymer compound according to third embodiment includes a step of decomposing a cleavable structure by light irradiation in the presence of an acid. As a light irradiation condition and an acid introduction condition, the conditions of the method for decomposing the polymer compound of the first embodiment can be used. By irradiating the polymer compound according to the third embodiment with light in the presence of an acid, a cleavable structure can be cleaved. This can reduce the molecular weight of the polymer compound according to the third embodiment.

The polymer compound according to the third embodiment can be decomposed (solated) by further promoting cleavage of a bond by cooperative action between light irradiation and an acid in the polymer compound according to the third embodiment. In addition, a compound processed by cooperative action between light irradiation and an acid is stable to light by removing the acid. Therefore, for example, under photoexcitation at 365 nm, blue fluorescence derived from a pyrene structure in the skeleton is emitted. Therefore, fluorescence luminescence characteristic can be utilized while optical processing based on patterning using a photomask is used for the polymer compound according to the third embodiment. As a result, the material of the present invention can also be used as a luminescent material which can be optically processed.

The polymer compound according to the third embodiment has been described in detail above. The polymer compound according to the third embodiment can cleave a bond by being irradiated with light in the presence of an acid, and therefore can be optically processed. The polymer compound of the third embodiment has a cleavable structure in a main chain. By light irradiation in the presence of an acid, the molecular weight of the polymer compound can be adjusted. The polymer compound according to the third embodiment is stable under ambient light because a bond is not cleaved without an acid even when being irradiated with light. In addition, the cleavable structure of the polymer compound according to the third embodiment uses silicon and is therefore inexpensive.

Note that the technical scope of the present invention is not limited to the above embodiment, and various modifications can be made without departing from the gist of the present invention. Besides, it is possible to appropriately replace the constituent elements in the above embodiments with well-known constituent elements, and the above embodiments may be appropriately combined without departing from the gist of the present invention.

### [Examples]

Next, Examples of the present invention will be described, but conditions in Examples are condition examples adopted to confirm operability and effects of the present invention, and the present invention is not limited to the condition examples. The present invention can adopt various conditions if the object of the present invention is achieved without departing from the gist of the present invention.

### (Synthesis of 4-(6-bromopyren-1-yl) phenol)

In a nitrogen atmosphere, 1,6-dibromopyrene (2 g, 5.56 mmol), 4-hydroxyphenylboronic acid (766.7 mg, 5.56 mmol), and potassium carbonate (2.3 g, 16.67 mmol) were mixed with a mixed liquid of 1,4-dioxane (100 mL) and water (5 ml), and then a dichloro (tristriphenylphosphine) palladium complex (195 mg, 0.278 mmol) was added thereto. The obtained mixed liquid was stirred at 80°C overnight, and then 4-hydroxyphenylboronic acid (350 mg) was added to the mixture. Note that overnight means 12 hours or more and 24 hours or less. Furthermore, the obtained mixed liquid was stirred at 80°C for 2.5 hours. Water was added to the reaction solution thus obtained at room temperature to quench the reaction solution. A target product (4-(6-bromopyren-1-yl) phenol) was extracted from the quenched reaction solution with dichloromethane/tetrahydrofuran. The solution containing the extracted target product was dehydrated with magnesium sulfate and filtered, and then the solvent was distilled off. Subsequently, the target product was isolated by silica gel column chromatography (hexane : dichloromethane = 1 : 1 → 0 : 1) and recrystallization (dichloromethane/hexane) to obtain the target product as a white solid (879 mg, yield: 42%). It was confirmed by ¹H-NMR that the obtained compound was (4-(6-bromopyren-1-yl) phenol).

¹H-NMR (500 MHz; CDCl₃):δ 8.46 (d, J = 9.1 Hz, 1H), 8.26 (d, J = 6.0 Hz, 1H), 8.25 (d, J = 6.2 Hz, 1H), 8.20 (d, J = 9.1, 2H), 8.01-7.97 (m, 3H), 7.50 (d, J = 8.4 Hz, 2H), 7.04 (d, J = 8.4 Hz, 2H), 4.88 (s, 1H)

### (Synthesis of 2-(2-(4-(6-bromopyren-1-yl) phenoxy) ethoxy) tetrahydro-2H-pyran)

In a nitrogen atmosphere, (4-(6-bromopyren-1-yl) phenol) (860 mg, 2.06 mmol) and potassium carbonate (954 mg, 6.18 mmol) were mixed with N,N-dimethylformamide (15 mL), and then 2-(2-bromoethoxy) tetrahydro-2H-pyran (643 µL, 4.12 mmol) was added thereto. The obtained mixed liquid was stirred at 70°C overnight (overnight), and then water was added to the obtained reaction solution at room temperature to quench the reaction solution. A target product (2-(2-(4-(6-bromopyren-1-yl) phenoxy) ethoxy) tetrahydro-2H-pyran) was extracted from the quenched reaction solution with dichloromethane, and then the solution containing the extracted target product was washed with saturated saline. The obtained solution was dehydrated with magnesium sulfate and filtered, and then the solvent was distilled off. Subsequently, the target product was isolated by silica gel column chromatography (hexane : dichloromethane = 1 : 1 - 0 : 1) to obtain the target product as a light yellow solid (459 mg, yield: 44%). It was confirmed by ¹H-NMR that the obtained compound was 2-(2-(4-(6-bromopyren-1-yl) phenoxy) ethoxy) tetrahydro-2H-pyran).

¹H-NMR(500 MHz; CDCl₃):δ 8.46 (d, J = 9.2 Hz, 1H), 8.22 (m, 4H), 8.01-7.96 (m, 3H), 7.54 (d, J = 8.7 Hz, 2H), 7.14 (d, J = 8.7 Hz, 2H), 4.78 (t, J = 3.6 Hz, 1H), 4.30-4.28 (m, 2H), 4.16-4.12 (m, 1H), 3.94 (m, 2H), 3.60-3.56 (m, 1H), 1.92-1.56 (m, 6H).

### (Synthesis of dimethylbis(6-(4-(2-((tetrahydro-2H-pyran-2-yl) oxy) ethoxy) phenyl) pyren-1-yl) silane)

In a nitrogen atmosphere, (2-(2-(4-(6-bromopyren-1-yl) phenoxy) ethoxy) tetrahydro-2H-pyran) (459 mg, 0.939 mmol) was dissolved in tetrahydrofuran (20 mL), and then a n-butyllithium hexane solution (1.6 M, 645 µL) was added to the obtained solution at -70°C or lower. The obtained solution was stirred at -70°C or lower for 30 minutes. Subsequently, dimethyldichlorosilane (51 µL, 0.422 mmol) was added to the obtained solution at -70°C or lower, and then the obtained solution was stirred overnight while the temperature of the obtained solution was returned from -70°C to room temperature. Water was added to the obtained reaction solution at room temperature to quench the reaction solution. A target product (dimethylbis(6-(4-(2-((tetrahydro-2H-pyran-2-yl) oxy) ethoxy) phenyl) pyren-1-yl) silane) was extracted from the quenched reaction solution with dichloromethane. Thereafter, the solution containing the extracted target product was dehydrated with magnesium sulfate and filtered, and then the solvent was distilled off. Subsequently, the target product was isolated from the obtained solid by preparative size exclusion chromatography to obtain the target product as a yellow solid (368 mg, yield: 78%). It was confirmed by ¹H-NMR that the obtained compound was dimethylbis(6-(4-(2-((tetrahydro-2H-pyran-2-yl) oxy) ethoxy) phenyl) pyren-1-yl) silane.

¹H-NMR(500 MHz; CDCl₃):δ 8.42 (d, J = 7.6 Hz, 1H), 8.23-8.19 (m, 3H), 8.08 (d, J = 7.9 Hz, 1H), 8.03 (d, J = 9.4 Hz, 1H), 7.89 (d, J = 7.8 Hz, 1H), 7.82 (d, J = 9.2 Hz, 1H), 7.52 (d, J = 8.7 Hz, 2H), 7.12 (d, J = 8.7 Hz, 2H), 4.77 (t, J = 3.8 Hz, 1H), 4.30-4.27 (m, 2H), 4.15-4.11 (m, 1H), 3.98-3.88 (m, 2H), 3.60-3.55 (m, 1H), 1.92-1.57 (m, 6H), 1.09 (s, 3H).

### (Synthesis of 2,2'-((((dimethylsilanediyl) bis(pyrene-6,1-diyl)) bis(4,1-phenylene)) bis(oxy)) bis(ethan-1-ol))

In a nitrogen atmosphere, (dimethylbis (6-(4-(2-((tetrahydro-2H-pyran-2-yl) oxy) ethoxy) phenyl) pyren-1-yl) silane) (290 mg, 0.32 mmol) was dissolved in a mixed liquid of tetrahydrofuran (20 mL) and methanol (20 mL), and then p-toluenesulfonic acid monohydrate (40 mg, 0.21 mmol) was added thereto. Subsequently, the obtained mixture was stirred overnight at room temperature. Water was added to the reaction solution thus obtained at room temperature to quench the reaction solution. A target product was extracted from the quenched reaction solution with dichloromethane. The solution containing the extracted target product (2,2'-((((dimethylsilanediyl) bis(pyrene-6,1-diyl)) bis(4,1-phenylene)) bis(oxy)) bis(ethan-1-ol)) was washed with saturated saline. The obtained solution was dehydrated with magnesium sulfate and filtered, and then the solvent was distilled off. Subsequently, the obtained solid was washed with methanol to obtain the target product as a yellow solid (164 mg, yield: 70%).

It was confirmed by ¹H-NMR that the obtained compound was 2,2'-((((dimethylsilanediyl) bis(pyrene-6,1-diyl)) bis(4,1-phenylene)) bis(oxy)) bis(ethan-1-ol).

¹H-NMR(500 MHz; CDCl₃):δ 8.42 (d, J = 7.6 Hz, 1H), 8.23-8.19 (m, 3H), 8.08 (d, J = 7.8 Hz, 1H), 8.04 (d, J = 9.3 Hz, 1H), 7.89 (d, J = 7.8 Hz, 1H), 7.82 (d, J = 9.2 Hz, 1H), 7.53 (d, J = 8.7 Hz, 2H), 7.11 (d, J = 8.7 Hz, 2H), 4.22 (t, J = 4.5 Hz, 2H), 4.05 (dt, J = 5.9, 4.6 Hz, 2H), 2.08 (t, J = 6.3 Hz, 1H), 1.10 (s, 3H).

### (Synthesis of trimethyl (pyren-1-yl) silane)

In a nitrogen atmosphere, 1-bromopyrene (500 mg, 1.79 mmol) was dissolved in tetrahydrofuran (20 mL), and then a n-butyllithium hexane solution (1.6 M, 1.45 mL) was added to the obtained solution at -70°C or lower. The obtained solution was stirred at - 70°C or lower for 30 minutes. Subsequently, chlorotrimethyl silane (292 µL, 2.32 mmol) was added to the obtained solution at -70°C or lower, and then the obtained solution was stirred overnight while the temperature of the obtained solution was returned from -70°C to room temperature. Water was added to the obtained reaction solution at room temperature to quench the reaction solution. A target product (trimethyl (pyren-1-yl) silane) was extracted from the quenched reaction solution with dichloromethane. Thereafter, the solution containing the extracted target product was dehydrated with magnesium sulfate and filtered, and then the solvent was distilled off. Subsequently, the target product was isolated from the obtained solid by preparative size exclusion chromatography to obtain the target product as a brown solid (358 mg, yield: 73%). It was confirmed by ¹H-NMR that the obtained compound was trimethyl (pyren-1-yl) silane.

### (NMR)

¹H-NMR (500 MHz; CDCl₃):δ °8.37 (d, J = 9.1 Hz, 1H), 8.21-8.12 (m, 5H), 8.08 (d, J = 8.9 Hz, 1H), 8.06 (d, J = 8.9 Hz, 1H), 8.01 (t, J = 7.6 Hz, 1H), 0.60 (s, 6H).

Note that it was confirmed whether the obtained target product (trimethyl (pyren-1-yl) silane) caused cleavage in a cleavable structure by irradiating the small molecule with light in the presence of an acid (that is, by cooperative action between the irradiation and the acid) using "experiment for confirming bond cleavage" described later.

### (Synthesis of dimethyl (phenyl) (pyren-1-yl) silane)

In a nitrogen atmosphere, 1-bromopyrene (500 mg, 1.79 mmol) was dissolved in tetrahydrofuran (20 mL), and then a n-butyllithium hexane solution (1.6 M, 1.45 mL) was added to the obtained solution at -70°C or lower. The obtained solution was stirred at - 70°C or lower for 30 minutes. Subsequently, chlorodimethylphenylsilane (369 µL, 2.32 mmol) was added to the obtained solution at -70°C or lower, and then the obtained solution was stirred overnight while the temperature of the obtained solution was returned from - 70°C to room temperature. Water was added to the obtained reaction solution at room temperature to quench the reaction solution. A target product (dimethyl (phenyl) (pyren-1-yl) silane) was extracted from the quenched reaction solution with dichloromethane. Thereafter, the solution containing the extracted target product was dehydrated with magnesium sulfate and filtered, and then the solvent was distilled off. Subsequently, the target product was isolated from the obtained solid by preparative size exclusion chromatography to obtain the target product as a white solid (532 mg). It was confirmed by ¹H-NMR that the obtained compound was dimethyl (phenyl) (pyren-1-yl) silane. Note that the obtained target product had a purity (based on NMR peak assignment) of 90% or more.

### (NMR)

¹H-NMR (500 MHz; CDCl₃):δ °8.24 (d, J = 7.6 Hz, 1H), 8.21-8.15 (m, 4H), 8.09 (m, 2H), 8.01-7.97 (m, 2H), 7.60-7.58 (m, 2H), 7.38-7.34 (m, 3H), 0.84 (s, 6H).

Note that it was confirmed whether the obtained target product (dimethyl (phenyl) (pyren-1-yl) silane) caused cleavage in a cleavable structure by irradiating the small molecule with light in the presence of an acid (that is, by cooperative action between the irradiation and the acid) using "experiment for confirming bond cleavage" described later.

### (Synthesis of 1,1,3,3-tetramethyl-1,3-di(pyren-1-yl) disiloxane)

In a nitrogen atmosphere, 1-bromopyrene (500 mg, 1.79 mmol) was dissolved in tetrahydrofuran (20 mL), and then a n-butyllithium hexane solution (1.6 M, 1.23 mL) was added to the obtained solution at -70°C or lower. The obtained solution was stirred at - 70°C or lower for 30 minutes. Subsequently, 1,3-Dichloro-1,1,3,3-tetramethyldisiloxane (157µL, 0.804 mmol) was added to the obtained solution at -70°C or lower, and then the obtained solution was stirred overnight while the temperature of the obtained solution was returned from -70°C to room temperature. Water was added to the obtained reaction solution at room temperature to quench the reaction solution. A target product (1,1,3,3-tetramethyl-1,3-di(pyren-1-yl) disiloxane) was extracted from the quenched reaction solution with dichloromethane. Thereafter, the solution containing the extracted target product was dehydrated with magnesium sulfate and filtered, and then the solvent was distilled off. Subsequently, the target product was isolated from the obtained solid by preparative size exclusion chromatography to obtain the target product as a brown solid (83.4 mg, yield: 17%). It was confirmed by ¹H-NMR that the obtained compound was 1,1,3,3-tetramethyl-1,3-di(pyren-1-yl) disiloxane.

### (NMR)

¹H-NMR (500 MHz; CDCl₃):δ °8.48 (d, J = 9.1 Hz, 2H), 8.22 (d, J = 7.6 Hz, 2H), 8.16 (d, J = 7.6 Hz, 2H), 8.10-8.06 (m, 6H), 7.99 (m, 4H), 7.87 (d, J = 9.2 Hz, 2H), 0.65 (s, 12H).

Note that it was confirmed whether the obtained target product (1,1,3,3-tetramethyl-1,3-di(pyren-1-yl) disiloxane) caused cleavage in a cleavable structure by irradiating the small molecule with light in the presence of an acid (that is, by cooperative action between the irradiation and the acid) using "experiment for confirming bond cleavage" described later.

### (Synthesis of 1,2-bis(dimethyl (pyren-1-yl) silyl) ethane)

In a nitrogen atmosphere, 1-bromopyrene (500 mg, 1.79 mmol) was dissolved in tetrahydrofuran (27 mL), and then a n-butyllithium hexane solution (1.6 M, 1.22 mL) was added to the obtained solution at -70°C or lower. The obtained solution was stirred at - 70°C or lower for 30 minutes. Subsequently, 1,2-Bis(chlorodimethylsilyl) ethane (171 mg, 0.799 mmol) was added to the obtained solution at -70°C or lower, and then the obtained solution was stirred overnight while the temperature of the obtained solution was returned from -70°C to room temperature. Water was added to the obtained reaction solution at room temperature to quench the reaction solution. A target product (1,2-bis(dimethyl (pyren-1-yl) silyl) ethane) was extracted from the quenched reaction solution with dichloromethane. Thereafter, the solution containing the extracted target product was dehydrated with magnesium sulfate and filtered, and then the solvent was distilled off. Subsequently, the target product was isolated from the obtained solid by preparative size exclusion chromatography to obtain the target product (326 mg, yield: 67%).

It was confirmed by ¹H-NMR that the obtained compound was 1,2-bis(dimethyl (pyren-1-yl) silyl) ethane.

### (NMR)

¹H-NMR (500 MHz; CDCl₃):δ 8.16 (d, J = 7.0 Hz, 2H), 8.13-7.96 (m, 16H), 7.76 (d, J = 9.0 Hz, 2H), 1.04 (s, 4H), 0.53 (s, 12H).

Note that it was confirmed whether the obtained target product (1,2-bis(dimethyl (pyren-1-yl) silyl) ethane) caused cleavage in a cleavable structure by irradiating the small molecule with light in the presence of an acid (that is, by cooperative action between the irradiation and the acid) using "experiment for confirming bond cleavage" described later.

### (Synthesis of reactive compound 1)

In a nitrogen atmosphere, (2,2'-((((dimethylsilanediyl) bis(pyrene-6,1-diyl)) bis(4,1-phenylene)) bis(oxy)) bis(ethan-1-ol)) (105 mg, 0.144 mmol) was dissolved in a mixed liquid of dichloromethane (15 mL) and triethylamine (300 µL), and then acrylic acid chloride (93.4 mL, 1.15 mmol) was added to the obtained solution at 0°C. The obtained solution was stirred at room temperature for two hours, and then a saturated sodium bicarbonate aqueous solution was added to the obtained reaction solution at room temperature to quench the reaction solution. A target product (((((dimethylsilanediyl) bis(pyrene-6,1-diyl)) bis(4,1-phenylene)) bis(oxy)) bis(ethane-2,1-diyl) diacrylate) was extracted from the reaction solution with dichloromethane, and then the extracted target product was washed with saturated saline. The obtained solution was dehydrated with magnesium sulfate and filtered, and then the solvent was distilled off.

Subsequently, the target product was isolated from the obtained solid by preparative size exclusion chromatography to obtain the target product as a yellow solid (66 mg, yield: 55%).

It was confirmed by ¹H-NMR that the obtained reactive compound 1 was ((((dimethylsilanediyl) bis(pyrene-6,1-diyl)) bis(4,1-phenylene)) bis(oxy)) bis(ethane-2,1-diyl) diacrylate).

¹H-NMR (500 MHz; CDCl₃):δ 8.42 (d, J = 7.6 Hz, 1H), 8.20 (m, 3H), 8.08 (d, J = 7.9 Hz, 2H), 8.03 (d, J = 9.4 Hz, 2H), 7.89 (d, J = 7.8 Hz, 1H), 7.82 (d, J = 9.3 Hz, 1H), 7.53 (d, J = 8.7 Hz, 2H), 7.11 (d, J = 8.7 Hz, 2H), 6.49 (dd, J = 17.3, 1.4 Hz, 1H), 6.21 (dd, J = 17.3, 10.5 Hz, 1H), 5.89 (dd, J = 10.5, 1.4 Hz, 1H), 4.60 (t, J = 4.8 Hz, 2H), 4.34 (t, J = 4.8 Hz, 2H), 1.10 (s, 3H).

### (Synthesis of polymer compound of Example 1)

Methyl methacrylate (371 µL), the reactive compound 1 ((((dimethylsilanediyl) bis(pyrene-6,1-diyl)) bis(4,1-phenylene)) bis(oxy)) bis(ethane-2,1-diyl) diacrylate) (2.64 mg, 3.15 × 10⁻³ mmol), and 2,2'-Azobis(2,4-dimethylvaleronitrile) (0.52 mg, 2.1 × 10⁻³ mmol) were dissolved in N,N-dimethylformamide (173 µL), and then the obtained solution was put into a Teflon (registered trademark) container and was caused to react at 60°C for 18 hours. A gel formed in the Teflon (registered trademark) container was swollen with N,N-dimethylformamide and dichloromethane, and then shrunk in methanol to remove a dissolved component as impurities. Subsequently, the obtained insoluble component (that is, shrunk gel) was swollen with N,N-dimethylformamide to obtain a gel A (polymer compound of Example 1).

### (Synthesis of polymer compound of Example 2)

Methyl methacrylate (371 µL), the reactive compound 1 (((((dimethylsilanediyl) bis(pyrene-6,1-diyl)) bis(4,1-phenylene)) bis(oxy)) bis(ethane-2,1-diyl) diacrylate) (1.76 mg, 2.1 × 10⁻³ mmol), N,N'-methylenbis (acrylamide) (0.16 mg, 1.05 × 10⁻³ mmol), and 2,2'-Azobis(2,4-dimethylvaleronitrile) (0.52 mg, 2.1 × 10⁻³ mmol) were dissolved in N,N-dimethylformamide (173 µL), and then the obtained solution was put into a Teflon (registered trademark) container and was caused to react at 60°C for 18 hours. A gel formed in the Teflon (registered trademark) container was swollen with N,N-dimethylformamide and dichloromethane, and then shrunk in methanol to remove a dissolved component as impurities. Subsequently, the obtained insoluble component (that is, shrunk gel) was swollen with N,N-dimethylformamide to obtain a gel B (polymer compound of Example 2).

### (Synthesis of polymer compound of Example 3)

N-(2-Hydroxyethyl) acrylamide (333 µL), the reactive compound 1 (((((dimethylsilanediyl) bis(pyrene-6,1-diyl)) bis(4,1-phenylene)) bis(oxy)) bis(ethane-2,1-diyl) diacrylate) (0.81 mg, 9.6 × 10⁻⁴ mmol), and 1-hydroxycyclohexyl phenyl ketone (3.5 mg, 1.7 × 10⁻² mmol) were dissolved in dimethyl sulfoxide (167 µL) to prepare a pre-gel solution. Subsequently, the obtained pre-gel solution was sealed in a Teflon (registered trademark) container, and the whole of the Teflon (registered trademark) container was irradiated with a UV lamp having an intensity of 0.5 mW/cm² and a wavelength of 365 nm for 10 minutes to cause reaction. A gel formed in the Teflon (registered trademark) container was swollen with N,N-dimethylformamide, and then shrunk with dichloromethane and acetone to remove a dissolved component as impurities. Subsequently, the obtained insoluble component (that is, shrunk gel) was swollen with N,N-dimethylformamide to obtain a gel C (polymer compound of Example 3).

### (Synthesis of polymer compound of Example 4)

Methyl acrylate (372 µL), the reactive compound 1 ((((dimethylsilanediyl) bis(pyrene-6,1-diyl)) bis(4,1-phenylene)) bis(oxy)) bis(ethane-2,1-diyl) diacrylate) (3.1 mg, 3.7 × 10⁻³ mmol) and 2,2'-Azobis(2,4-dimethylvaleronitrile) (1.02 mg, 4.1 × 10⁻³ mmol) were dissolved in N,N-dimethylformamide (174 µL), and then the obtained solution was put into a Teflon (registered trademark) container and was caused to react at 60°C for 18 hours. A gel formed in the Teflon (registered trademark) container was swollen with N,N-dimethylformamide and dichloromethane, and then shrunk in methanol to remove a dissolved component. Subsequently, the obtained insoluble component (that is, shrunk gel) was swollen with N,N-dimethylformamide to obtain a gel D (polymer compound of Example 1).

### (Synthesis of polymer compound of Example 5)

Acrylic acid (220 µL), the reactive compound 1 ((((dimethylsilanediyl) bis(pyrene-6,1-diyl)) bis(4,1-phenylene)) bis(oxy)) bis(ethane-2,1-diyl) diacrylate) (1.35 mg, 1.61 × 10⁻³ mmol) and 2,2'-Azobis(2,4-dimethylvaleronitrile) (0.4.23 mg, 1.7 × 10⁻² mmol) were dissolved in dimethyl sulfoxide (110 µL), and then the obtained solution was put into a Teflon (registered trademark) container and was caused to react at 60°C for 18 hours. A gel formed in the Teflon (registered trademark) container was swollen with acetone, and then shrunk under vacuum to obtain a dry polymer material E (polymer compound of Example 5).

### (Confirmation Experiment 1 of cooperative action between light irradiation and acid)

Gel A (polymer compound of Example 1) was shrunk in methanol. Subsequently, the shrunk gel A was swollen with an ethyl acetate solution containing 0.2 M hydrogen chloride for two hours. Thereafter, the swollen gel A was partially irradiated with a UV lamp having an intensity of 50 mW/cm² and a wavelength of 365 nm for 10 minutes.

The gel A simultaneously treated with an acid and ultraviolet light in this manner was washed with ethyl acetate, then shrunk with methanol, and vacuumed. The obtained shrunk gel A was swollen with N,N-methylformamide, and the shape of the obtained gel was observed.

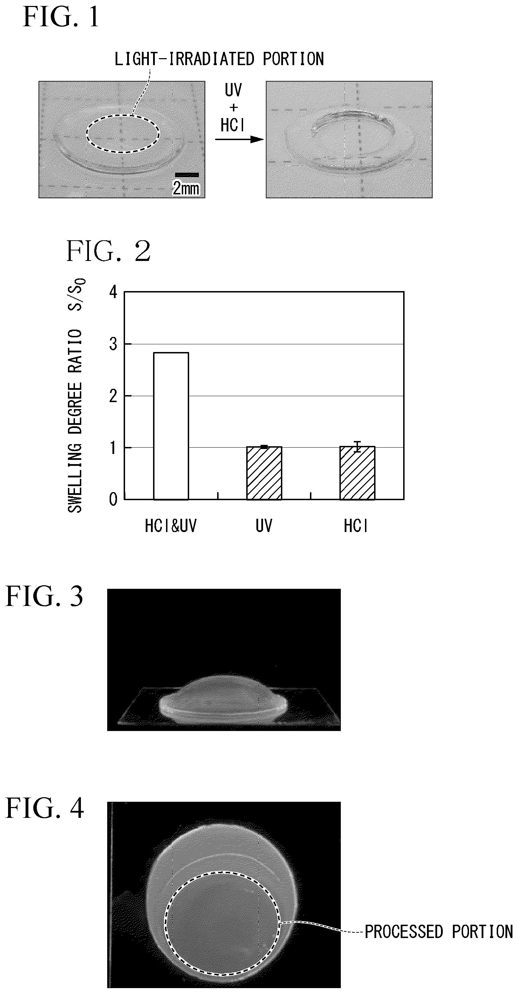

Obtained results are illustrated in FIG. 1. FIG. 1 is a diagram illustrating an observation result of the polymer compound of Example 1 before light irradiation and an observation result thereof after light irradiation in the presence of an acid. The left diagram of FIG. 1 is a photograph of the gel A (polymer compound of Example 1) before light irradiation, and the right diagram of FIG. 1 is a photograph of the gel A after light irradiation in the presence of an acid. As is clear from FIG. 1, in the polymer compound of Example 1, it was confirmed that only a light-irradiated portion was decomposed.

### (Confirmation Experiment 2 of cooperative action between light irradiation and acid)

Next, a difference in swelling degree due to a difference in treatment conditions was examined. Specifically, a swelling degree in a case where light irradiation treatment was performed in the presence of an acid, a swelling degree in a case where only light irradiation treatment was performed, and a swelling degree in a case where only acid treatment was performed were compared. Specific conditions will be described below.

### (Swelling degree in a case where light irradiation treatment is performed in presence of acid)

The mass (S₀) of the gel B (polymer compound of Example 2) was measured. The gel B was shrunk in methanol. Subsequently, the shrunk gel B was swollen with an ethyl acetate solution containing 0.2 M hydrogen chloride for two hours. Thereafter, the swollen gel B was irradiated with a UV lamp having an intensity of 50 mW/cm² and a wavelength of 365 nm for 10 minutes. The gel B thus obtained, which had been simultaneously treated with an acid and ultraviolet light, was washed with ethyl acetate, then shrunk with methanol, and vacuumed. The obtained shrunk gel was swollen with N,N-dimethylformamide, the shape of the obtained gel was observed, the mass (S₁) thereof was measured, and a swelling degree (S = S₁/S₀) of the gel B was measured.

### (Swelling degree in a case where only light irradiation treatment is performed)

The mass (S₀) of the gel B (polymer compound of Example 2) was measured. The gel B was shrunk in methanol. Subsequently, the shrunk gel B was swollen with ethyl acetate for two hours. Thereafter, the swollen gel B was irradiated with a UV lamp having an intensity of 50 mW/cm² and a wavelength of 365 nm for 10 minutes.

The gel B thus obtained, which had been treated only with ultraviolet light, was washed with ethyl acetate, then shrunk with methanol, and vacuumed. The obtained shrunk gel was swollen with N,N-dimethylformamide, the shape of the obtained gel was observed, the mass (S₁) thereof was measured, and a swelling degree (S = S₁/S₀) of the gel B was measured.

### (Swelling degree in a case where only acid treatment is performed)

The mass (S₀) of the gel B (polymer compound of Example 2) was measured. The gel B was shrunk in methanol. Subsequently, the shrunk gel B was swollen with an ethyl acetate solution containing 0.2 M hydrogen chloride for two hours, and then heated to 40°C for 10 minutes. The gel B thus obtained, which had been treated only with an acid, was washed with ethyl acetate, then shrunk with methanol, and vacuumed. The obtained shrunk gel B was swollen with N,N-dimethylformamide, the shape of the obtained gel was observed, the mass (S₁) thereof was measured, and a swelling degree (S = S₁/S₀) of the gel B was measured.

Obtained results are illustrated in FIG. 2. FIG. 2 is a graph comparing a swelling degree of the gel B in a case where light irradiation treatment is performed in the presence of an acid, a swelling degree of the gel B in a case where only light irradiation treatment is performed, and a swelling degree of the gel B in a case where only acid treatment is performed. In FIG. 2, the vertical axis represents a swelling degree S₁/S₀. HCl & UV on the horizontal axis represents a case where light irradiation treatment is performed in the presence of an acid, UV represents a case where only light irradiation treatment is performed, and HCl represents a case where only acid treatment is performed. As is clear from FIG. 2, there was no difference in swelling degree between a case where only light irradiation was performed and a case where only acid treatment was performed. On the other hand, the swelling degree largely increased in a case where light irradiation was performed in the presence of an acid. This is because a bond in a cleavable structure was cleaved in the presence of an acid to decrease a crosslinking density. From this result, it was confirmed that the polymer compound of Example 2 was decomposable only in a case where light irradiation was performed in the presence of an acid.

### (Confirmation Experiment 3 of cooperative action between light irradiation and acid)

Next, a change in emission spectrum due to cleavage was examined. Specifically, shape observation and hyperspectral measurement in a case where light irradiation treatment was performed in the presence of an acid, shape observation in a case where only light irradiation treatment was performed, and shape observation in a case where only acid treatment was performed were compared. Specific conditions will be described below. Note that the shape observation was performed under an irradiation environment of light at 365 nm.

### (Light irradiation treatment in presence of acid)

The gel C (polymer compound of Example 3) was swollen with an N,N-dimethylformamide/water solution (mixing ratio (v/v) between N,N-dimethylformamide and water: 9812) containing 0.2 M hydrogen chloride for two hours, and then irradiated with a UV lamp having an intensity of 15 mW/cm² and a wavelength of 365 nm for 10 minutes. The gel thus obtained, which had been simultaneously treated with an acid and ultraviolet light, was washed with N,N-dimethylformamide, and then shrunk with dichloromethane and acetone. By swelling the shrunk gel with water, the shape of the obtained gel C was observed under light irradiation at a wavelength of 365 nm, and then an emission spectrum of the gel C (under light irradiation at a wavelength of 365 nm) was measured using a hyperspectral camera.

### (Light irradiation treatment)

The gel C (polymer compound of Example 3) was swollen with an N,N-dimethylformamide/water mixed liquid (mixing ratio (v/v) between N,N-dimethylformamide and water: 9812) for two hours, and then irradiated with a UV lamp having an intensity of 15 mW/cm² and a wavelength of 365 nm for 10 minutes. The gel thus obtained, which had been treated only with ultraviolet light, was swollen with water, and the shape of the obtained gel was observed under light irradiation at a wavelength of 365 nm.

### (Acid treatment)

The gel C (polymer compound of Example 3) was swollen with an N,N-dimethylformamide/water solution (mixing ratio (v/v) between N,N-dimethylformamide and water: 98/2) containing 0.2 M hydrogen chloride for two hours, and then heated to 40°C for 10 min.

The gel thus obtained, which had been treated only with an acid, was washed with N,N-dimethylformamide, and then shrunk with dichloromethane and acetone. The shrunk gel was swollen with water, and the shape of the obtained gel was observed under light irradiation at a wavelength of 365 nm.

### (Shape observation image)

A shape observation image of a gel was measured using a hyperspectral camera (Eba Japan, NH-8). Data were collected by being multiplied by a correction factor. The correction coefficient was determined from a ratio between a value obtained by measuring a spectrum of a xenon light source (MAX-303 manufactured by Asahi Spectroscopy Co., Ltd.) with a photoluminescence device (PF-6000 manufactured by Shimadzu Corporation) and a value obtained by measuring the spectrum using a hyperspectral camera.

### (Emission spectrum measurement)

An emission spectrum was measured using a hyperspectral camera (Eba Japan, NH-8).

FIGS. 3 to 5 illustrate a result of performing light irradiation treatment in the presence of an acid. FIG. 3 illustrates a shape observation image of a side surface of a gel swollen with water after being subjected to light irradiation treatment in the presence of an acid under light irradiation at a wavelength of 365 nm. FIG. 4 illustrates a shape observation image of an upper surface of a gel swollen with water after being subjected to light irradiation treatment in the presence of an acid under light irradiation at a wavelength of 365 nm. As is clear from FIGS. 3 and 4, a light-irradiated portion was largely swollen with water.

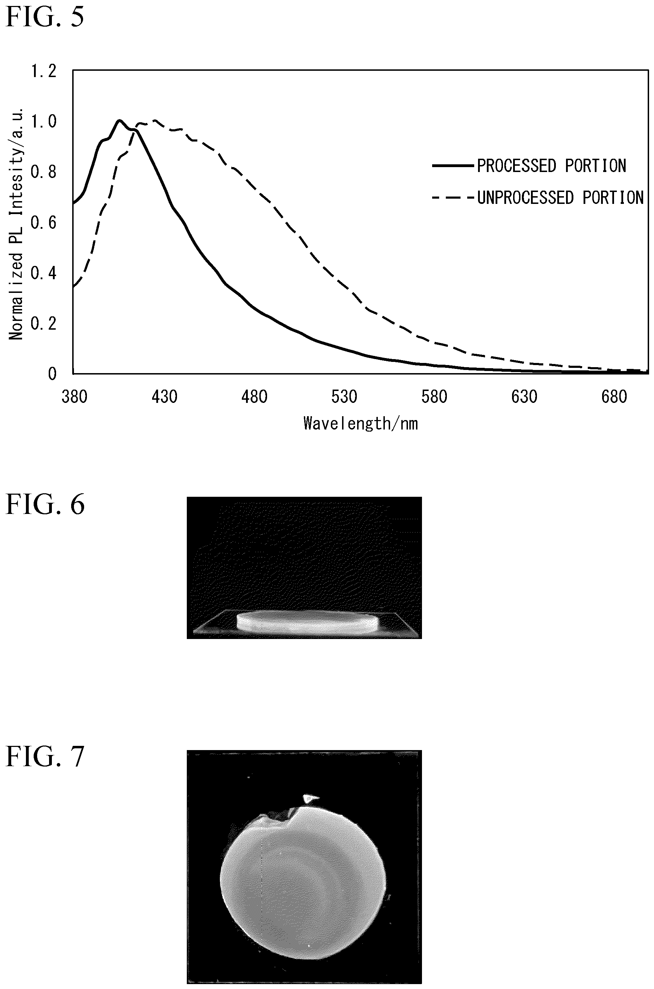

FIG. 5 is an emission spectrum of a gel swollen with water after light irradiation treatment in the presence of an acid, measured using a hyperspectral camera under light irradiation at a wavelength of 365 nm. In FIG. 5, the vertical axis represents an emission intensity (a. u.), and the horizontal axis represents a wavelength. As illustrated in FIG. 5, it was found that a peak position of an emission spectrum of a processed portion was shifted to a shorter wavelength side. From this result, it was confirmed that cleavage of the crosslinked structure and cohesiveness (excimer formation) of the pyrene skeleton changed, whereby a luminescence characteristic was changed.

FIGS. 6 and 7 illustrate a result of performing only light irradiation treatment. FIG. 6 illustrates a shape observation image of a side surface of a gel swollen with water after being subjected only to light irradiation treatment under light irradiation at 365 nm. FIG. 7 illustrates a shape observation image of an upper surface of a gel swollen with water after being subjected only to light irradiation treatment under light irradiation at 365 nm. As is clear from FIGS. 6 and 7, it was found that the swelling degree was lower than that in a case where light irradiation was performed in the presence of an acid. In a hyperspectral image, a slight difference was observed between a processed portion and an unprocessed portion, but there was almost no change. Therefore, it was confirmed that there was little change in chemical structure only by light irradiation.

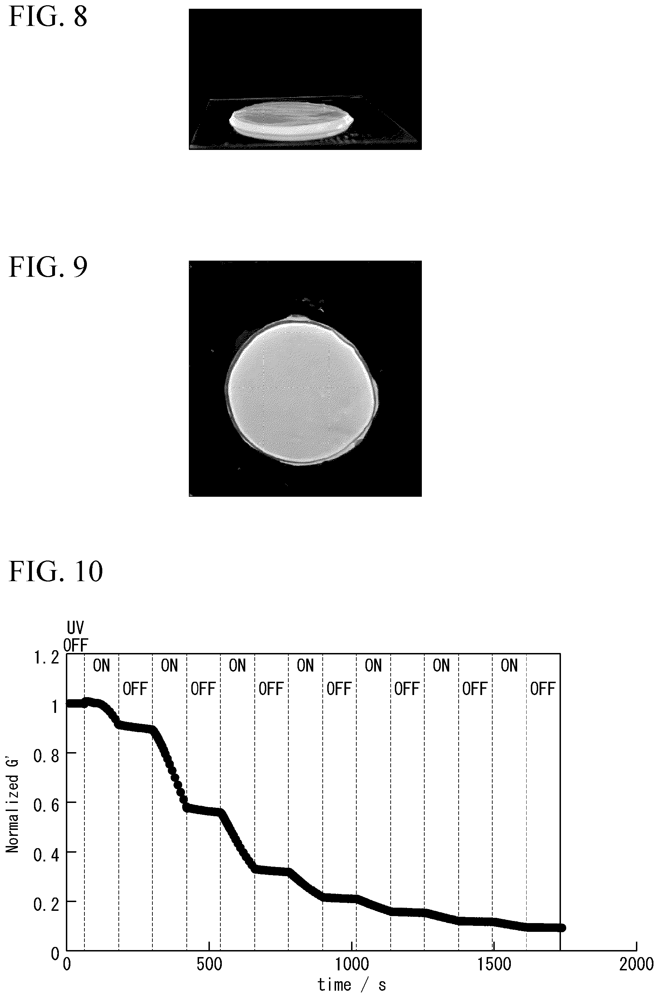

FIGS. 8 and 9 illustrate a result of performing only acid treatment. FIG. 8 illustrates a shape observation image of a side surface of a gel swollen with water after being subjected only to acid treatment under light irradiation at 365 nm. FIG. 9 illustrates a shape observation image of an upper surface of a gel swollen with water after being subjected only to acid treatment under light irradiation at 365 nm. As is clear from FIGS. 8 and 9, it was found that the swelling degree was lower than that in a case where light irradiation was performed in the presence of an acid. In addition, in a hyperspectral image, there was no change between a processed portion and an unprocessed portion. Therefore, it was confirmed that there was no change in chemical structure only by acid treatment.

### (Confirmation Experiment 4 of cooperative action between light irradiation and acid)

Next, an influence of cleavage on a viscoelastic characteristic was examined. Specifically, it was confirmed that a change in viscoelastic characteristic of a gel was based on light irradiation by measuring the viscoelastic characteristic of the gel while intermittently irradiating the gel with light in the presence of an acid. Similarly, influences of light irradiation and an acid concentration on the viscoelastic characteristic of the gel were also examined by changing a light irradiation condition and an acid concentration condition. Specific conditions will be described below.

### (Light irradiation treatment in presence of acid)

The gel D (polymer compound of Example 4) was swollen with an N,N-dimethylformamide/ethyl acetate solution (mixing ratio (v/v) between N,N-dimethylformamide and ethyl acetate: 19/1) containing 0.2 M hydrogen chloride for two hours. Thereafter, using a viscoelasticity measuring device (MCR 302e manufactured by Anton paar), viscoelasticity was measured while the swollen gel D was intermittently irradiated with light. In the light irradiation, treatment of performing irradiation with a UV lamp (intensity: 4 mW/cm², wavelength: 365 nm) for 120 s and then stopping the irradiation for 120 s was repeated until the viscoelasticity measurement was completed. A viscoelastic characteristic of the gel D was measured while the gel D was irradiated with light (2 mW) under different acid concentration conditions (0 M to 0.2 M). Similarly, in the presence of an acid (0.2 M hydrogen chloride), the viscoelasticity of the gel D was measured while the gel D was irradiated with light under different light irradiation conditions (0.2 mW to 3.8 mW). Note that, in any viscoelasticity measurement, as strain conditions, a shear strain was 1% and a frequency was 1 Hz.

FIG. 10 is a diagram illustrating a relationship between elapsed time and a storage elastic modulus when viscoelasticity measurement is performed while light irradiation is intermittently performed in the presence of an acid. Note that, in the measurement, viscoelasticity measurement was performed without light irradiation for the first 60 seconds, and then viscoelasticity measurement was performed while light irradiation was intermittently performed. The horizontal axis represents an elapsed time (s), and the vertical axis represents a storage elastic modulus normalized by a storage elastic modulus before light irradiation. As illustrated in FIG. 10, the storage elastic modulus continued to decrease during light irradiation, but the storage elastic modulus did not decrease while the irradiation was stopped. From this result, it was confirmed that a change in viscoelasticity was based on light irradiation.

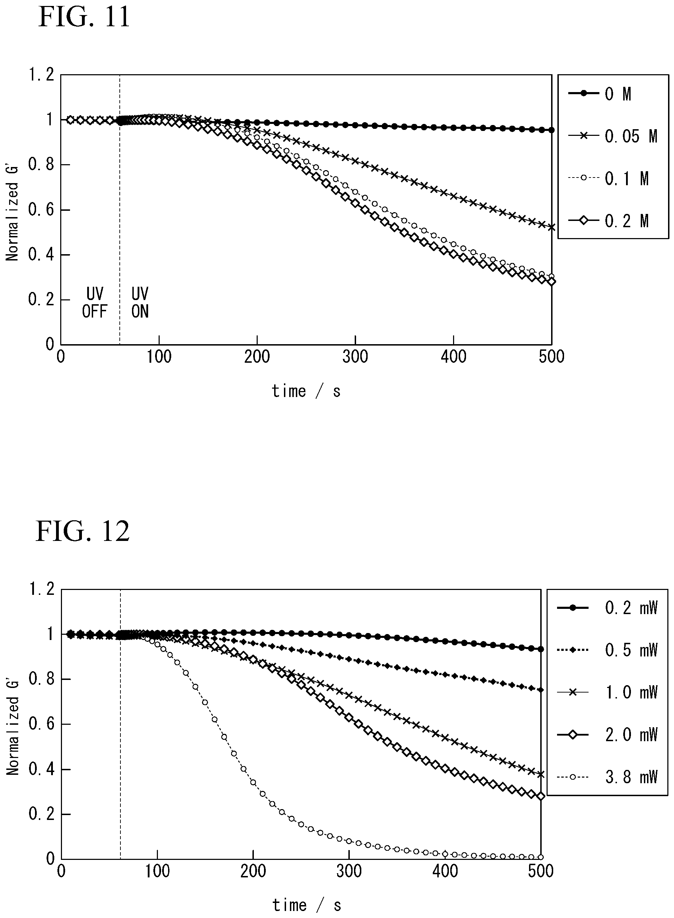

FIG. 11 is a diagram illustrating a relationship between elapsed time and a storage elastic modulus at each acid concentration when viscoelasticity measurement is performed while light irradiation is performed. Note that, in the measurement, viscoelasticity measurement was performed without light irradiation for the first 60 seconds, and then viscoelasticity measurement was performed while light irradiation was intermittently performed. The horizontal axis represents an elapsed time (s), and the vertical axis represents a storage elastic modulus normalized by a storage elastic modulus before light irradiation. As illustrated in FIG. 11, as the concentration of the acid increased, the storage elastic modulus significantly decreased by light irradiation. In addition, the storage elastic modulus decreased according to time of light irradiation. From this, it was confirmed that the storage elastic modulus did not decrease (bond was not cleaved) only by light.

FIG. 12 is a diagram illustrating a relationship between elapsed time and a storage elastic modulus at each irradiation intensity when viscoelasticity measurement is performed while light irradiation is performed. Note that, in the measurement, viscoelasticity measurement was performed without light irradiation for the first 60 seconds, and then viscoelasticity measurement was performed while light irradiation was intermittently performed. The horizontal axis represents an elapsed time (s), and the vertical axis represents a storage elastic modulus normalized by a storage elastic modulus before light irradiation. As illustrated in FIG. 12, as the light irradiation intensity increased, the storage elastic modulus significantly decreased by light irradiation. In addition, the storage elastic modulus decreased according to time of light irradiation. From this, it was confirmed that the storage elastic modulus did not decrease (bond was not cleaved) only by an acid.

As described above, it was confirmed that bond cleavage depended on the acid concentration and/or the light irradiation intensity. Therefore, it has been found that the cleavage reaction is a cooperative action between light and an acid.

### (Confirmation Experiment 5 of cooperative action between light irradiation and acid)

Next, an influence of a swollen state of a gel on cooperative action between light irradiation and an acid was examined. Specifically, an influence of a swelling degree (that is, a ratio of a gel mass to a dry mass) was confirmed by measuring a viscoelastic characteristic of a gel in which a swelling degree was changed while the gel was irradiated with light in the presence of an acid. Specific conditions will be described below.

A viscoelasticity of the obtained dry polymer material E (polymer compound of Example 5) was measured while the dry polymer material E was irradiated with light using a viscoelasticity measuring device (MCR 302e manufactured by Anton paar). Light irradiation was performed with a UV lamp (Intensity: 1 mW/cm², wavelength: 365 nm). The dry polymer material E was swollen with water at different swelling degrees as described below, and viscoelasticity measurement was performed in a similar manner to that for the dry state. Note that, as strain conditions in the viscoelasticity measurement, a shear strain was 1% and a frequency was 1 Hz.

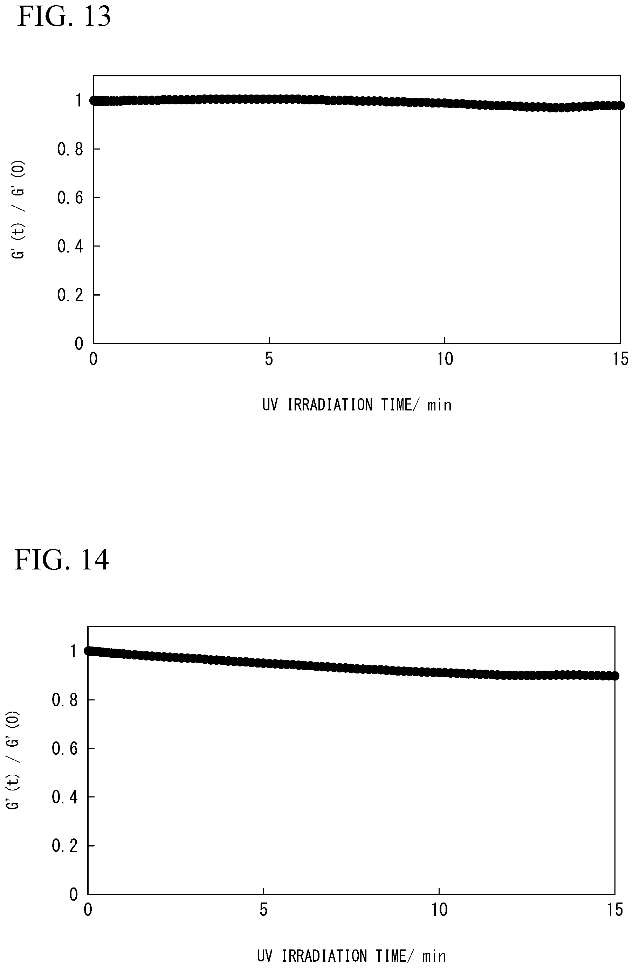

FIG. 13 is a diagram illustrating a relationship between light irradiation time and a storage elastic modulus G' when viscoelasticity measurement is performed while a gel in a dry state (swelling degree: 1) is irradiated with light. In FIG. 13, the horizontal axis represents irradiation time (min), and the vertical axis represents a value obtained by normalizing a storage elastic modulus G' (kPa) with an initial storage elastic modulus G' (0) (kPa). As illustrated in FIG. 13, in the dry state, the normalized storage elastic modulus G'/G' (0) did not decrease even when light was irradiated. Therefore, it has been found that, in the dry state, the cleavage reaction is suppressed because the acid has no mobility in the material.

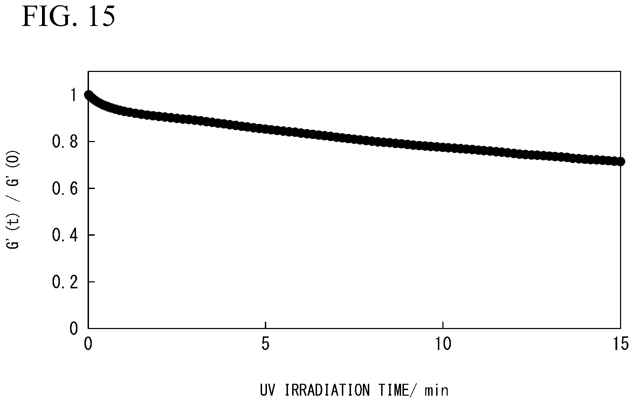

FIG. 14 is a diagram illustrating a relationship between light irradiation time and a storage elastic modulus G' when viscoelasticity measurement is performed while a gel in a swollen state (71%w/w, swelling degree: 3.4, swollen state obtained by adding water in an amount two times the mass of the polymer material E) is irradiated with light. In FIG. 14, the horizontal axis represents irradiation time (min), and the vertical axis represents a value obtained by normalizing a storage elastic modulus G' (kPa) with an initial storage elastic modulus G' (0) (kPa). FIG. 15 is a diagram illustrating a relationship between light irradiation time and a storage elastic modulus G' when viscoelasticity measurement is performed while a gel in an equilibrium swollen state (81% w/w, swelling degree: 5.4, equilibrium swollen state in which the polymer material E is completely swollen in water) is irradiated with light. In FIG. 15, the horizontal axis represents irradiation time (min), and the vertical axis represents a value obtained by normalizing a storage elastic modulus G' (kPa) with an initial storage elastic modulus G' (0) (kPa). As illustrated in FIGS. 14 and 15, the normalized storage elastic modulus G'/G'(0) decreased as the light irradiation time increased. In addition, the tendency was more significant when the swelling degree was higher. As illustrated in FIGS. 13 to 15, it was confirmed that the higher the swelling degree, the more the cleavage reaction proceeded. From the above results, it has been confirmed that by incorporating the acid into the dry polymer compound in advance, the polymer compound is swollen with water when necessary, and the acid is caused to act in the polymer compound, whereby the polymer compound can be decomposed.

### (Bond cleavage confirmation experiment)

Next, it was confirmed whether cleavage occurred in the cleavable structure by irradiating a small molecule with light in the presence of an acid (that is, by cooperative action between the irradiation and the acid).

### (Reaction when trimethyl (pyren-1-yl) silane is subjected to light irradiation treatment in presence of acid)

An N,N-dimethylformamide solution (1 mg/mL) of trimethyl (pyren-1-yl) silane (CAS No. 18662-97-0) was prepared. 0.20 mL of the obtained solution was diluted with 0.80 mL of N,N-dimethylformamide, and then 0.2 mL of concentrated hydrochloric acid (37%) was added to the obtained diluted solution. The obtained solution was caused to react by being irradiated with a UV lamp having an intensity of 50 mW/cm² and a wavelength of 365 nm for 10 minutes from a distance of 1 cm. To the reaction solution after the reaction, 5 mL of water and 5 mL of saturated saline were added to quench the reaction solution. A yield was evaluated by an internal standard method. Tri-tert-butylbenzene was added as an internal standard, and then a product contained in the reaction solution was extracted with ethyl acetate. When the extraction solution containing the product was subjected to quantitative analysis of the product using gas chromatography (using GC-2010 manufactured by Shimadzu Corporation), it was confirmed that pyrene was generated at a yield of 7%.

### (Reaction when trimethyl (pyren-1-yl) silane is subjected only to light irradiation treatment)

An N,N-dimethylformamide solution (1 mg/mL) of trimethyl (pyren-1-yl) silane (CAS No. 18662-97-0) was prepared. 0.20 mL of the obtained solution was diluted with 0.80 mL of N,N-dimethylformamide, and then 0.2 mL of water was added to the obtained diluted solution. The obtained solution was caused to react by being irradiated with a UV lamp having an intensity of 50 mW/cm² and a wavelength of 365 nm for 10 minutes from a distance of 1 cm. To the reaction solution after the reaction, 5 mL of water and 5 mL of saturated saline were added to quench the reaction solution. Tri-tert-butylbenzene was added as an internal standard, and then a product contained in the reaction solution was extracted with ethyl acetate. When the extraction solution containing the product was subjected to quantitative analysis of the product using gas chromatography (using GC-2010 manufactured by Shimadzu Corporation), it was confirmed that pyrene was generated at a yield of < 1%.

### (Reaction when trimethyl (pyren-1-yl) silane is subjected only to acid treatment)

An N,N-dimethylformamide solution (1 mg/mL) of trimethyl (pyren-1-yl) silane (CAS No. 18662-97-0) was prepared. 0.20 mL of the obtained solution was diluted with 0.80 mL of N,N-dimethylformamide, and then 0.2 mL of concentrated hydrochloric acid (37%) was added to the obtained diluted solution. The obtained solution was heated and stirred at 40°C for 10 minutes to be caused to react. To the reaction solution after the reaction, 5 mL of water and 5 mL of saturated saline were added to quench the reaction solution. Tri-tert-butylbenzene was added as an internal standard, and then a product contained in the reaction solution was extracted with ethyl acetate. When the extraction solution containing the product was subjected to quantitative analysis of the product using gas chromatography (using GC-2010 manufactured by Shimadzu Corporation), it was confirmed that pyrene was generated at a yield of < 1%.

From the above, it was confirmed that when trimethyl (pyren-1-yl) silane was irradiated with light in the presence of an acid, the bond was cleaved to obtain pyrene. On the other hand, it was confirmed that the bond of trimethyl (pyren-1-yl) silane was not cleaved even when only the light irradiation treatment or only the acid treatment was performed.

### (Reaction when dimethyl (phenyl) (pyren-1-yl) silane is subjected to light irradiation treatment in presence of acid)

An N,N-dimethylformamide solution (1 mg/mL) of dimethyl (phenyl) (pyren-1-yl) silane was prepared. 0.20 mL of the obtained solution was diluted with 0.80 mL of N,N-dimethylformamide, and then 0.2 mL of concentrated hydrochloric acid (37%) was added to the obtained diluted solution. The obtained solution was caused to react by being irradiated with a UV lamp having an intensity of 50 mW/m² and a wavelength of 365 nm for 10 minutes from a distance of 1 cm. To the reaction solution after the reaction, 5 mL of water and 5 mL of saturated saline were added to quench the reaction solution. Tri-tert-butylbenzene was added as an internal standard, and then a product contained in the reaction solution was extracted with ethyl acetate. When the extraction solution containing the product was subjected to quantitative analysis of the product using gas chromatography (using GC-2010 manufactured by Shimadzu Corporation), it was confirmed that pyrene was generated at a yield of 6%.

### (Reaction when dimethyl (phenyl) (pyren-1-yl) silane is subjected only to light irradiation treatment)

An N,N-dimethylformamide solution (1 mg/mL) of dimethyl (phenyl) (pyren-1-yl) silane was prepared. 0.20 mL of the obtained solution was diluted with 0.80 mL of N,N-dimethylformamide, and then 0.2 mL of water was added to the obtained diluted solution. The obtained solution was caused to react by being irradiated with a UV lamp having an intensity of 50 mW/cm² and a wavelength of 365 nm for 10 minutes from a distance of 1 cm. To the reaction solution after the reaction, 5 mL of water and 5 mL of saturated saline were added to quench the reaction solution. Tri-tert-butylbenzene was added as an internal standard, and then a product contained in the reaction solution was extracted with ethyl acetate. When the extraction solution containing the product was subjected to quantitative analysis of the product using gas chromatography (using GC-2010 manufactured by Shimadzu Corporation), it was confirmed that pyrene was generated at a yield of < 1%.

### (Reaction when dimethyl (phenyl) (pyren-1-yl) silane is subjected only to acid treatment)

An N,N-dimethylformamide solution (1 mg/mL) of dimethyl (phenyl) (pyren-1-yl) silane was prepared. 0.20 mL of the obtained solution was diluted with 0.80 mL of N,N-dimethylformamide, and then 0.2 mL of concentrated hydrochloric acid (37%) was added to the obtained diluted solution. The obtained solution was heated and stirred at 40°C for 10 minutes to be caused to react. To the reaction solution after the reaction, 5 mL of water and 5 mL of saturated saline were added to quench the reaction solution. Tri-tert-butylbenzene was added as an internal standard, and then a product contained in the reaction solution was extracted with ethyl acetate. When the extraction solution containing the product was subjected to quantitative analysis of the product using gas chromatography (using GC-2010 manufactured by Shimadzu Corporation), it was confirmed that pyrene was generated at a yield of < 1%.

From the above, it was confirmed that when dimethyl (phenyl) (pyren-1-yl) silane was irradiated with light in the presence of an acid, the bond was cleaved to obtain pyrene. On the other hand, it was confirmed that the bond of dimethyl (phenyl) (pyren-1-yl) silane was not cleaved even when only the light irradiation treatment or only the acid treatment was performed.

### (Reaction when 1,1,3,3-tetramethyl-1,3-di(pyren-1-yl) disiloxane is subjected to light irradiation treatment in presence of acid)

An N,N-dimethylformamide solution (1 mg/mL) of 1,1,3,3-tetramethyl-1,3-di(pyren-1-yl) disiloxane was prepared. 0.20 mL of the obtained solution was diluted with 0.80 mL of N,N-dimethylformamide, and then 0.2 mL of concentrated hydrochloric acid (37%) was added to the obtained diluted solution. The obtained solution was caused to react by being irradiated with a UV lamp having an intensity of 50 mW/cm² and a wavelength of 365 nm for 10 minutes from a distance of 1 cm. To the reaction solution after the reaction, 5 mL of water and 5 mL of saturated saline were added to quench the reaction solution. Tri-tert-butylbenzene was added as an internal standard, and then a product contained in the reaction solution was extracted with ethyl acetate. When the extraction solution containing the product was subjected to quantitative analysis of the product using gas chromatography (using GC-2010 manufactured by Shimadzu Corporation), it was confirmed that pyrene was generated at a yield of 9%.

### (Reaction when 1,1,3,3-tetramethyl-1,3-di(pyren-1-yl) disiloxane is subjected only to light irradiation treatment)

An N,N-dimethylformamide solution (1 mg/mL) of 1,1,3,3-tetramethyl-1,3-di(pyren-1-yl) disiloxane was prepared. 0.20 mL of the obtained solution was diluted with 0.80 mL of N,N-dimethylformamide, and then 0.2 mL of water was added to the obtained diluted solution. The obtained solution was caused to react by being irradiated with a UV lamp having an intensity of 50 mW/cm² and a wavelength of 365 nm for 10 minutes from a distance of 1 cm. To the reaction solution after the reaction, 5 mL of water and 5 mL of saturated saline were added to quench the reaction solution. Tri-tert-butylbenzene was added as an internal standard, and then a product contained in the reaction solution was extracted with ethyl acetate. When the extraction solution containing the product was subjected to quantitative analysis of the product using gas chromatography (using GC-2010 manufactured by Shimadzu Corporation), it was confirmed that pyrene was generated at a yield of < 1%.

### (Reaction when 1,1,3,3-tetramethyl-1,3-di(pyren-1-yl) disiloxane is subjected only to acid treatment)

An N,N-dimethylformamide solution (1 mg/mL) of 1,1,3,3-tetramethyl-1,3-di(pyren-1-yl) disiloxane was prepared. 0.20 mL of the obtained solution was diluted with 0.80 mL of N,N-dimethylformamide, and then 0.2 mL of concentrated hydrochloric acid (37%) was added to the obtained diluted solution. The obtained solution was heated and stirred at 40°C for 10 minutes to be caused to react. To the reaction solution after the reaction, 5 mL of water and 5 mL of saturated saline were added to quench the reaction solution. Tri-tert-butylbenzene was added as an internal standard, and then a product contained in the reaction solution was extracted with ethyl acetate. When the extraction solution containing the product was subjected to quantitative analysis of the product using gas chromatography (using GC-2010 manufactured by Shimadzu Corporation), it was confirmed that pyrene was generated at a yield of 5%.

### (Reaction when 1,2-bis(dimethyl (pyren-1-yl) silyl) ethane is subjected to light irradiation treatment in presence of acid)

An N,N-dimethylformamide solution (1 mg/mL) of 1,2-bis(dimethyl (pyren-1-yl) silyl) ethane was prepared. 0.20 mL of the obtained solution was diluted with 0.80 mL of N,N-dimethylformamide, and then 0.2 mL of concentrated hydrochloric acid (37%) was added to the obtained diluted solution. The obtained solution was caused to react by being irradiated with a UV lamp having an intensity of 50 mW/cm² and a wavelength of 365 nm for 10 minutes from a distance of 1 cm. To the reaction solution after the reaction, 5 mL of water and 5 mL of saturated saline were added to quench the reaction solution. A yield was evaluated by an internal standard method. Tri-tert-butylbenzene was added as an internal standard, and then a product contained in the reaction solution was extracted with ethyl acetate. When the extraction solution containing the product was subjected to quantitative analysis of the product using gas chromatography (using GC-2010 manufactured by Shimadzu Corporation), it was confirmed that pyrene was generated at a yield of 15%.

### (Reaction when 1,2-bis(dimethyl (pyren-1-yl) silyl) ethane is subjected only to light irradiation treatment)

An N,N-dimethylformamide solution (1 mg/mL) of 1,2-bis(dimethyl (pyren-1-yl) silyl) ethane was prepared. 0.20 mL of the obtained solution was diluted with 0.80 mL of N,N-dimethylformamide, and then 0.2 mL of water was added to the obtained diluted solution. The obtained solution was caused to react by being irradiated with a UV lamp having an intensity of 50 mW/cm² and a wavelength of 365 nm for 10 minutes from a distance of 1 cm. To the reaction solution after the reaction, 5 mL of water and 5 mL of saturated saline were added to quench the reaction solution. Tri-tert-butylbenzene was added as an internal standard, and then a product contained in the reaction solution was extracted with ethyl acetate. When the extraction solution containing the product was subjected to quantitative analysis of the product using gas chromatography (using GC-2010 manufactured by Shimadzu Corporation), it was confirmed that pyrene was generated at a yield of < 1%.

### (Reaction when 1,2-bis(dimethyl (pyren-1-yl) silyl) ethane is subjected only to acid treatment)

An N,N-dimethylformamide solution (1 mg/mL) of 1,2-bis(dimethyl (pyren-1-yl) silyl) ethane was prepared. 0.20 mL of the obtained solution was diluted with 0.80 mL of N,N-dimethylformamide, and then 0.2 mL of concentrated hydrochloric acid (37%) was added to the obtained diluted solution. The obtained solution was heated and stirred at 40°C for 10 minutes to be caused to react. To the reaction solution after the reaction, 5 mL of water and 5 mL of saturated saline were added to quench the reaction solution. Tri-tert-butylbenzene was added as an internal standard, and then a product contained in the reaction solution was extracted with ethyl acetate. When the extraction solution containing the product was subjected to quantitative analysis of the product using gas chromatography (using GC-2010 manufactured by Shimadzu Corporation), it was confirmed that pyrene was generated at a yield of 1%.

From the above, it was confirmed that when 1,2-bis(dimethyl (pyren-1-yl) silyl) ethane was irradiated with light in the presence of an acid, the bond was cleaved to obtain pyrene. On the other hand, it was confirmed that the bond of 1,2-bis(dimethyl (pyren-1-yl) silyl) ethane was not cleaved even when only the light irradiation treatment or only the acid treatment was performed.

### [Industrial Applicability]

Thea polymer compound, the reactive compound, the polymer crosslinking agent, the polymer modifier, the crosslinked part forming method, the polymer modifying method, the polymer compound polymerizing method, and the polymer compound decomposing method of the present invention are inexpensive, stable under ambient light, and optically processable, and therefore have high industrial applicability.

## Claims

1. A polymer compound comprising a structure in which a conjugated carbon atom of a condensed polycyclic aromatic ring group and a silicon atom are bonded to each other in a bond-cleavable form by cooperative action between light irradiation and an acid.

2. The polymer compound according to claim 1, wherein the light irradiation is irradiation light with light including an absorption wavelength region of the structure in which bonding is formed in a bond-cleavable form.

3. The polymer compound according to claim 1 or 2, further comprising a side chain, wherein
the structure is included in the side chain.

4. The polymer compound according to claim 1 or 2, further comprising a crosslinked part which bonds main chains to each other, wherein
the structure is included in the crosslinked part.

5. The polymer compound according to claim 1 or 2, wherein the structure is included in a main chain.

6. The polymer compound according to claim 1 or 2, wherein the structure is represented by the following formula (1): 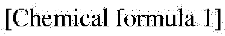 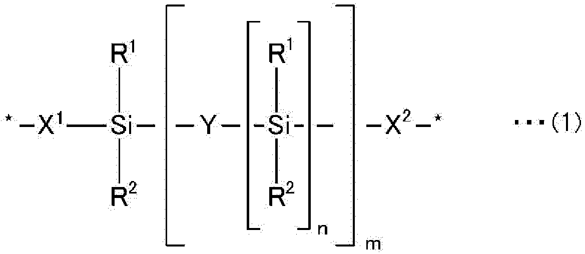 wherein, X¹ is a monovalent or divalent condensed polycyclic aromatic ring group with or without a substituent, X² is a divalent condensed polycyclic aromatic ring group with or without a substituent or a single bond, Y is a single bond, an oxygen atom, or an alkylene group, R¹ is an alkyl group or an alkoxy group, R² is an alkyl group or an alkoxy group, n is 0 or 1, m is an integer of 0 to 5, and * is a bond, provided that, when Y is a single bond, n is 0, and when Y is an oxygen atom and n is 0, m is 1.

7. The polymer compound according to claim 6, wherein each of the condensed polycyclic aromatic ring groups of X¹ and X² is formed by condensation of 2 to 6 aromatic rings.

8. The polymer compound according to claim 7, wherein m is 0.

9. The polymer compound according to claim 7, wherein m is 1.

10. The polymer compound according to claim 6, wherein R¹ is a methyl group or an ethyl group, and R² is a methyl group or an ethyl group.

11. The polymer compound according to claim 6, wherein the condensed polycyclic aromatic ring group of X² is a pyrenylene group with or without a substituent.

12. A reactive compound comprising:
a structure in which a conjugated carbon atom of a condensed polycyclic aromatic ring group and a silicon element are bonded to each other in a bond-cleavable form by cooperative action between light irradiation and an acid; and
one or more functional groups capable of being bonded to another compound.

13. The reactive compound according to claim 12, wherein the light irradiation is irradiation light with light including an absorption wavelength region of the structure in which bonding is formed in a bond-cleavable form.

14. The reactive compound according to claim 12 or 13, wherein the structure is represented by the following formula (2): 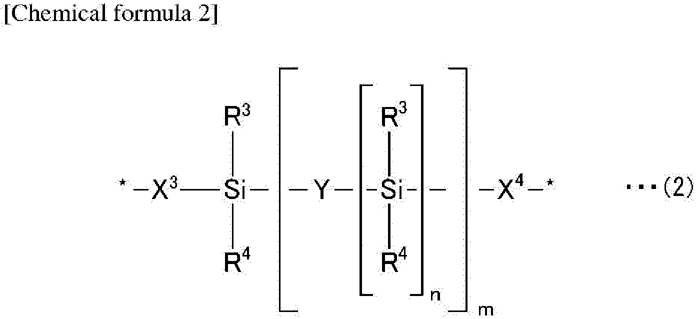 wherein, X³ is a monovalent or divalent condensed polycyclic aromatic ring group with or without a substituent, X⁴ is a divalent condensed polycyclic aromatic ring group with or without a substituent or a single bond, Y is a single bond, an oxygen atom, or an alkylene group, R³ is an alkyl group or an alkoxy group, R⁴ is an alkyl group or an alkoxy group, n is 0 or 1, m is an integer of 0 to 5, and * is a bond, provided that, when Y is a single bond, n is 0, and when Y is an oxygen atom and n is 0, m is 1.

15. The reactive compound according to claim 14, wherein each of the condensed polycyclic aromatic ring groups of X³ and X⁴ is formed by condensation of 2 to 6 aromatic rings.

16. The reactive compound according to claim 15, wherein m is 0.

17. The reactive compound according to claim 15, wherein m is 1.

18. The reactive compound according to claim 14, wherein R³ is a methyl group or an ethyl group, and R⁴ is a methyl group or an ethyl group.

19. The reactive compound according to claim 14, wherein the condensed polycyclic aromatic ring group of X⁴ is a pyrenylene group with or without a substituent.

20. A polymer crosslinking agent comprising the reactive compound according to claim 12.

21. A polymer modifier comprising the reactive compound according to claim 12.

22. A crosslinked part forming method comprising a step of forming a crosslinked part by chemically bonding the functional group of the reactive compound according to claim 12
to a functional group capable of being bonded to another compound, included in a polymer compound as a main chain.

23. A polymer modifying method comprising a step of modifying a polymer compound as a main chain by chemically bonding the functional group of the reactive compound according to claim 12
to a functional group capable of being bonded to another compound, included in the polymer compound.

24. A polymer compound polymerizing method comprising a step of polymerizing the reactive compound according to claim 12 and a polymerizable monomer.

25. A decomposition method comprising a step of decomposing the structure by irradiating the polymer compound according to claim 1 with light in presence of an acid.
